# EUROPÄISCHE PATENTANMELDUNG

(11) **EP 4 793 852 A1**
(43) Veröffentlichungstag der Anmeldung: **19.08.2026**
(21) Anmeldenummer: 25157830.8
(22) Anmeldetag: 13.02.2025
(51) Int. Cl.: G06Q 10/0832, G06Q 50/40, G06Q 50/26

(54) **VERFAHREN ZUM OPTIMIEREN UND ZUM DURCHFÜHREN EINES GROSSRAUM- UND/ODER SCHWERTRANSPORTS**

(71) Anmelder: Sommer, Helga, 48477 Hörstel-Dreierwalde (DE)
(72) Erfinder: Sommer, Helga, 48477 Hörstel-Dreierwalde (DE)
(74) Vertreter: Jeon, Jin

(57) **Zusammenfassung**

Bei einem Verfahren zum Optimieren eines Großraum- und/oder Schwertransports, das ein Bereitstellen eines virtuellen Datenraums (D) zur Kommunikation zwischen einem ersten Benutzer (A) und wenigstens einem zweiten Benutzer (B, B1, B2, B3), ein Bereitstellen eines initialen Transportdatensatzes (T), der Schwertransportdaten (GST), Streckeninformationen (S), Statusinformationen und gegebenenfalls wenigstens einen Identifikator umfasst, von dem ersten Benutzer (A) an den virtuellen Datenraum (D), ein Bereitstellen eines modifizierten Transportdatensatzes (T) durch den zweiten Benutzer (B, B1, B2, B3) an den virtuellen Datenraum (D) umfasst, ist vorgesehen, dass der modifizierten Transportdatensatz (T) hinsichtlich der Streckeninformationen (S) und/oder der Statusinformationen von dem initialen Transportdatensatz (T) abweicht.

## Beschreibung

### TECHNISCHER HINTERGRUND

Die vorliegende Erfindung betrifft das technische Gebiet des Schwertransportes. Insbesondere betrifft die vorliegende Erfindung die Aspekte der Planung und Durchführung des Schwertransportes unter Verwendung von computerimplementierten Verfahren.

Bei einem Schwertransport werden Verkehrsbauwerke genutzt, die für den gewöhnlichen Güter- und Personentransport ausgelegt sind, in der Regel aber nicht für Schwertransporte. Insbesondere Verkehrsbauwerke wie beispielsweise Straßen, Brücken, Tunnel, Unterführungen, Zufahrten, Kreuzungen, Straßen mit Verkehrsinseln, Kreisverkehr und dergleichen sind in der Regel für den herkömmlichen Straßenverkehr ausgelegt.

Daher gilt es für Schwertransporte, zusätzliche Anforderungen zu erfüllen, die über die Vorschriften für den gewöhnlichen Güter- und Personentransport hinausgehen. Deshalb wird jeder Schwertransport einzeln geplant, genehmigt und durchgeführt.

Vom herkömmlichen Straßenverkehr unterscheiden sich Großraum- und Schwertransporte (GST) durch Schwertransportdaten (Schwertransportdaten), die gesetzliche oder sonstige vorgeschriebene Zulassungsbedingungen für die Teilnahme am herkömmlichen Straßenverkehr nicht erfüllen. In der Bundesrepublik Deutschland sind diese Zulassungsbedingungen durch die Straßenverkehrs- und Zulassungsverordnung (StVZO) geregelt, insbesondere durch § 32 betreffend Abmessungen und § 34 betreffend Gewicht und Einzelachslast. Das Transportfahrzeug im Sinne der vorliegenden Offenbarung kann den Großraumtransport, den Schwertransport, den Großraum- und Schwertransport und/oder den Langtransport gemäß den Bestimmungen der StVZO oder der StVO (Straßenverkehrsordnung) betreffen. Sofern nicht anders angegeben, wird der Begriff Transport in der vorliegenden Offenbarung zusammenfassend für den Großraumtransport, den Schwertransport, den Großraum- und Schwertransport und den Langtransport verwendet. Mit Transportfahrzeug kann im Allgemeinen ein Schwertransportfahrzeug bezeichnet sein. Die Schwertransportdaten, insbesondere betreffend die Höhe, die Breite, die Länge, das Gesamtgewicht oder die Einzelachslast, können sich auf das Transportfahrzeug, auf das Transportgut oder auf die Kombination von beiden beziehen.

Bislang wird Routenplanungen für Gefahren- und Schwertransporte überwiegend analog durchgeführt. Die Daten der Routenplanung und die Übrigen Daten für die Antragsstellung werden in menschlich lesbarer Form in Textform, beispielsweise im PDF Format ausgegeben. Sodann werden Sie in ein behördliches Verwaltungssystem wiederum manuell eingegeben und manuell geprüft. Rückmeldungen, wie Nachfragen, Bewilligungen oder Ablehnungen werden in menschlich lesbarer Textform von der Behörde an den Antragssteller zurück übermittelt. Dieser analoge Prozess ist zeitaufwändig und fehleranfällig und kann zu kostenintensiven Verzögerungen führen.

Vor diesem Hintergrundstellt sich die technische Aufgabe, die Prozesse betreffend den Schwertransport hinsichtlich des Arbeits-, Kosten- und Zeitaufwands sowie hinsichtlich der Genauigkeit und Sicherheit zu verbessern.

### KURZZUSAMMENFASSUNG DER ERFINDUNG

Die technische Aufgabe wird durch den Gegenstand des Anspruchs 1 sowie durch den Gegenstand der nebengeordneten Ansprüche gelöst. Besonders vorteilhafte Ausführungsformen sind durch die abhängigen Ansprüche gegeben.

Erfindungsgemäß ist ein Verfahren zum Optimieren eines Großraum- und/oder Schwertransports (kurz: eines Transports) vorgesehen. Das Verfahren zum Optimieren eines Transports umfasst das Bereitstellen eines virtuellen Datenraums zur Kommunikation zwischen einem ersten Benutzer und wenigstens einem zweiten Benutzer. Das Verfahren zum Optimieren eines Transports umfasst ferner das Bereitstellen eines initialen Transportdatensatzes an den virtuellen Datenraum durch den ersten Benutzer. Der initiale Transportdatensatz kann auch als erster Transportdatensatz bezeichnet werden. Außerdem umfasst das Verfahren das Bereitstellen eines modifizierten Transportdatensatzes an den virtuellen Datenraum durch den zweiten Benutzer, wobei der modifizierten Transportdatensatz hinsichtlich der Streckeninformationen und/oder der Statusinformationen von dem initialen Transportdatensatz abweicht. Gegebenenfalls kann der modifizierte Transportdatensatz zusätzlich hinsichtlich eines Identifikators vom initialen Transportdatensatz abweichen. Der modifizierte Transportdatensatz kann auch als zweiter Transportdatensatz bezeichnet werden.

Der erste Benutzer unterscheidet sich von dem wenigstens einen zweiten Benutzer. Der erste Benutzer und der zweite Benutzer können insbesondere verschiedene Endgeräte verwenden, aus unterschiedlichen Netzwerken auf den virtuellen Datenraum zugreifen, und/oder von unterschiedlichen physikalischen Orten mit dem virtuellen Datenraum datenübertragungsgemäß verbunden sein. Der erste Benutzer kann beispielsweise als Antragssteller für den Großraum- und/oder Schwertransport auf den virtuellen Datenraum zugreifen. Der zweite Benutzer kann beispielsweise als Prüfungsstelle und/oder Genehmigungsstelle für den Großraum- und/oder Schwertransport auf den virtuellen Datenraum zugreifen.

In dem virtuellen Datenraum (kurz: VDR) können Transportdatensätze bereitgestellt werden. Der virtuelle Datenraum kann eine internetbasierte Plattform bezeichnen, die einen sicheren Onlinezugriff auf Transportdatensätze ermöglicht. Das Verfahren kann vorsehen, das ausschließlich vorbestimmte Benutzer dazu befähigt werden, auf den virtuellen Datenraum zuzugreifen. Vorzugsweise sind nur vorbestimmte Benutzer, insbesondere der erste Benutzer und der wenigstens eine zweite Benutzer, autorisiert, auf den virtuellen Datenraum zuzugreifen. Durch den ersten Benutzer und den wenigstens einen zweiten Benutzer können Transportdatensätze in dem virtuellen Datenraum bearbeitet werden, insbesondere bereitgestellt werden oder modifiziert werden. Der erste und/oder wenigstens eine zweite Benutzer greifen zum Bearbeiten von Transportdatensätzen auf den virtuellen Datenraum zu. Dem ersten Benutzer und der wenigstens einen zweiten Benutzer können individuelle, insbesondere unterschiedliche, Lese- und Schreiberechtigungen für die in dem virtuellen Datenraum bereitgestellten Transportdatensätze zugeordnet werden. Beispielsweise können die Berechtigungen derart definiert werden, dass jeder Benutzer ausschließlich die von ihm selbst bereitgestellten, insbesondere angelegten oder modifizierten, Transportdatensätze und/oder damit assoziierte Informationen zu löschen autorisiert ist. Der virtuelle Datenraum kann insbesondere dergestalt konfiguriert werden, dass beim Bereitstellen eines Transportdatensatzes durch einen Benutzer der bereitgestellte Transportdatensatz mit einem dem bereitstellenden Benutzer zugeordneten Identifikator assoziiert wird. Der virtuelle Datenraum kann ferner insbesondere dergestalt konfiguriert werden, dass beim Modifizieren eines Transportdatensatzes durch einen (ersten oder zweiten) Benutzer eine Kopie des insbesondere unmodifizierten Transportdatensatzes erzeugt und diese Kopie mit dem Identifikator des modifizierenden (ersten oder zweiten) Benutzers assoziiert wird, wobei der unmodifizierte Transportdatensatz vorzugsweise assoziiert bleibt mit dem Identifikator des Benutzers, der diesen unmodifizierten Transportdatensatz bereitgestellt hat.

Der virtuelle Datenraum kann dazu ausgelegt und eingerichtet sein, dass stets nur ein einziger Benutzer, also entweder nur ein einziger erster Benutzer oder nur ein einziger zweiter Benutzer, zu einem gegebenen Zeitpunkt auf den virtuellen Datenraum zuzugreifen autorisiert ist. Insbesondere kann der virtuelle Datenraum derart ausgestaltet sein, dass während des Zugreifens eines Benutzers auf den virtuellen Datenraum kein anderer Benutzer auf diesen virtuellen Datenraum zuzugreifen befähigt ist. Alternativ kann der virtuelle Datenraum derart ausgestaltet sein, dass während des Zugreifens eines Benutzers (beispielsweise ein zweiter Benutzer) auf einen bestimmten Transportdatensatz in dem virtuellen Datenraum kein anderer Benutzer (beispielsweise ein anderer zweiter Benutzer oder ein erster Benutzer) auf denselben Transportdatensatz zuzugreifen befähigt ist.

Das Verfahren kann darüber hinaus das Bereitstellen weiterer modifizierter Transportdatensätze an den virtuellen Datenraum durch den ersten Benutzer oder den zweiten Benutzer umfassen, wobei der jeweilige weitere modifizierte Transportdatensatz hinsichtlich des wenigstens einen Identifikators sowie der Streckeninformationen und/oder der Statusinformationen von dem vorigen modifizierten Transportdatensatz, insbesondere von allen übrigen Transportdatensätzen, abweicht. Der weitere modifizierte Transportdatensatz kann beispielsweise als zweiter, dritter, vierter ... n-ter Transportdatensatz bezeichnet werden. Vorzugsweise werden mit dem jeweiligen (ersten, zweiten, dritten... n-ten) Transportdatensatz Protokolldaten, wie ein Zeitstempel und/oder eine Versionsnummer, assoziiert. Alternativ oder zusätzlich wird ein Identifikator mit dem jeweiligen (ersten, zweiten, dritten... n-ten) Transportdatensatz assoziiert, wobei dieser Identifikator dem Benutzer individuell zugeordnet ist, der diesen Transportdatensatz bereitgestellt hat.

Der virtuelle Datenraum kann für einen Zugriff, insbesondere einen Lese- und Schreibzugriff, durch den ersten Benutzer und/oder den wenigstens einen zweiten Benutzer ausgelegt und eingerichtet sein. Insbesondere kann ein der Zugriff auf den virtuellen Datenraum für den ersten Benutzer und/oder den wenigstens einen zweiten Benutzer vermittels eines Web-Browsers und/oder einer Anwendung auf dem Endgerät des ersten Benutzers und/oder den wenigstens einen zweiten Benutzers ausgelegt und eingerichtet sein. Es kann bevorzugt sein, dass dem ersten Benutzer und/oder den wenigstens einen zweiten Benutzer beim Zugreifen auf den virtuellen Datenraum wenigstens ein individueller Identifikator, wie eine elektronisch Signatur, insbesondere eine qualifizierte elektronisch Signatur, zugeordnet wird. Das Verfahren zum Optimieren eines Transports kann umfassen, dass Zugriffe, insbesondere Lese- und/oder Schreibzugriffe, vorzugsweise zumindest Schreibzugriffe, durch den ersten Benutzer und/oder durch den wenigstens einen zweiten Benutzer, auf den virtuellen Datenraum in dem virtuellen Datenraum gespeichert werden. Das Speichern von Schreibzugriffen auf den virtuellen Datenraum kann beispielsweise durchgeführt werden, indem ein bereitgestellter Transportdatensatz assoziiert mit dem jeweiligen Identifikator des zugreifenden (ersten oder zweiten) Benutzer gespeichert wird, wobei vorzugsweise zusätzlich mit dem Zugriff assoziierte Protokolldaten, wie eine eindeutige Versionsnummer und/oder ein Zeitpunkt, gespeichert werden können.

Ein Transportdatensatz umfasst Schwertransportdaten und Streckeninformationen. Ferner kann ein Transportdatensatz gegebenenfalls Statusinformationen, einen Identifikator und/oder Protokolldaten umfassen. Vorzugsweise ist der insbesondere initiale von dem ersten Benutzer bereitgestellte Transportdatensatz mit einem dem ersten Benutzer zugeordneten Identifikator assoziiert.

Die Transportdaten (auch: Schwertransportdaten) enthalten vorzugsweise mindestens eines von einer Länge, einer Höhe, einer Breite, einer Gesamtmasse, einer Achslast (oder einzelnen Achslasten bei einer ungleichmäßigen Achslastverteilung) und einem Kurvenverhalten des Schwertransports, insbesondere bezogen auf die Gesamtheit eines Transportfahrzeugs und dessen Transportgut. Das Kurvenverhalten kann einen statischen Wendekreis und/oder einen dynamischen Parameter gemäß einer Schleppkurvenanalyse enthalten. Diese Schwertransportdaten umfassen wenigstens eines von Folgendem: ein Gesamtgewicht, das 18 Tonnen übersteigt, eine Einzelachslast, die 8 Tonnen oder 10 Tonnen übersteigt, eine Breite, die 2,55 Meter übersteigt, eine Höhe, die 4 Meter übersteigt; und eine Länge, die 15,5 Meter übersteigt. Die Schwertransportdaten können insbesondere diejenige oder diejenigen der vorgenannten Kennzahlen bezeichnen, die über den jeweils zulässigen Wert gemäß den Gesetzen und Verordnungen der jeweiligen Jurisdiktion (wie z.B. gemäß StVZO, StVO und StVG in der Bundesrepublik Deutschland) übersteigen.

Die Schwertransportdaten können vorzugsweise auf einen bestimmten Schwertransportbezogen sein. Der Schwertransport kann als Gefahrengut- und/oder Schwertransport bezeichnet sein. Die Schwertransportdaten können insbesondere ein Gesamtgewicht des Schwertransports definieren, welches 18 Tonnen, insbesondere 19,5 Tonnen, 20 Tonnen, 25 Tonnen, 28 Tonnen, 32 Tonnen, 35 Tonnen, 40 Tonnen, oder 44 Tonnen, übersteigt. Das Gesamtgewicht des Schwertransports kann bis zu 50 Tonnen, insbesondere bis zu 100 Tonnen, bis zu 500 Tonnen, bis zu 1000 Tonnen, bis zu 2500 Tonnen oder bis zu 5000 Tonnen, betragen.

Die Schwertransportdaten können alternativ oder zusätzlich eine Einzelachslast des Schwertransports definieren, welche 8 Tonnen oder 10 Tonnen, insbesondere 11,5 Tonnen, 16 Tonnen, 18 Tonnen, oder 20 Tonnenübersteigt. Die Einzelachslast des Schwertransports kann bis zu 20 Tonnen, insbesondere bis zu 50 Tonnen, bis zu 100 Tonnen oder bis zu 1000 Tonnen betragen.

Die Schwertransportdaten können alternativ oder zusätzlich eine Breite des Schwertransports sowie gegebenenfalls von dessen Transportgut definieren, welche 2,55 Meter übersteigt. Die Breite des Schwertransports kann mindestens 2,6 Meter, insbesondere mindestens 3 Meter, mindestens 3,5 Meter, mindestens 4 Meter oder mindestens 5 Meter, betragen. Die Breite des Schwertransports kann bis zu 4 Meter, insbesondere bis zu 5 Meter, bis zu 7 Meter, bis zu 10 Meter, bis zu 20 Meter, bis zu 50 Meter oder bis zu 100 Meter, betragen.

Die Schwertransportdaten können alternativ oder zusätzlich eine Höhe des Schwertransports definieren, welche 4 Meter übersteigt. Insbesondere kann die Höhe des Transportfahrzeugs 4,5 Meter, 5 Meter, 7 Meter, 10 Meter, 20 Meter oder 50 Meter übersteigen. Insbesondere kann die Höhe des Transportfahrzeugs bis zu 10 Meter, bis zu 20 Meter, bis zu 50 Meter, bis zu 100 Meter, bis zu 200 Meter oder bis zu 500 Meter betragen.

Die Schwertransportdaten können alternativ oder zusätzlich eine Länge des Schwertransports definieren, welche 15,5 Meter übersteigt. Insbesondere kann die Länge des Schwertransports 16,5 Meter, 18 Meter, 20 Meter, 25 Meter, 30 Meter, 40 Meter, 50 Meter, 100 Meter oder 200 Meter übersteigen. Insbesondere kann die Länge des Schwertransports bis zu 200 Meter, bis zu 300 Meter, bis zu 400 Meter, bis zu 500 Meter oder bis zu 1000 Meter betragen. Es ist zu beachten, dass für die Maße, die Gesamtmasse und die Achslast keine pauschalen Obergrenzen zu setzen sind, da diese durch die einzelnen Anforderungen des individuellen Transportvorhabens bestimmt werden.

Die Veränderung der Transportdaten kann beispielsweise eine Änderung oder Berichtigung eines Teils der Transportdaten oder der Gesamtheit der Transportdaten umfassen. Insbesondere werden nur bestimmte Benutzer, vorzugsweise nur der erste Benutzer, dazu autorisiert, die Transportdaten in dem virtuellen Datenraum zu ändern. Beispielsweise können die einzelnen Parameter betreffend die Länge, Höhe, Breite, Gesamtmasse, Achslast oder das Kurvenverhalten verändert werden. Die Veränderung der Transportdaten kann eine Änderung der Kompatibilität der Transportdaten mit Stellen insbesondere entlang der Transportstrecke entsprechend der Streckeninformationen und/oder außerhalb der Streckeninformationen zur Folge haben. Eine Änderung der Kompatibilität kann in dem virtuellen Datenraum insbesondere in einer digitalen Karte kartographisch dargestellt werden.

Mit Streckeninformationen kann eine vorbestimmte Strecke abschnittsweise oder vollständig definiert werden. Streckeninformationen können eine, zwei, drei oder mehr Stellen definieren, entlang derer eine Fahrt des Schwertransports vorgesehen ist. Die Streckeninformationen können insbesondere einen Startpunkt und/oder einen Zielpunkt umfassen. Vorzugsweise umfassen die Streckeninformationen sowohl einen Startpunkt als auch einen Zielpunkt. Der Startpunkt kann einen geographischen oder topographischen Ort kennzeichnen, an dem der Fahrzeugverband einen Transport entlang der Strecke beginnt. Der Zielpunkt kann einen geographischen oder topographischen Ort kennzeichnen, an dem der Transport des Fahrzeugverbandes, insbesondere des Transportfahrzeugs, endet. Die mindestens eine vorbestimmte Strecke kann eine beliebige topographische Verbindung zwischen dem Startpunkt und dem Zielpunkt umfassen. Insbesondere kann der erste Benutzer einen, insbesondere initialen oder modifizierten, Transportdatensatz bereitstellen, der Streckeninformationen umfasst, die mehrere vorbestimmte Stellen enthalten. Vorzugsweise kann der erste oder der wenigstens eine zweite Benutzer einen insbesondere modifizierten (zweiten, dritten, vierten, ... n-ten) Transportdatensatz bereitstellen, dessen Streckeninformationen in Bezug auf wenigstens eine Stelle modifiziert ist.

Optional können die Streckeninformationen wenigstens eine vorbestimmte Handlungsvorgabe umfassen, die einer vorbestimmten Stelle zugeordnet ist, oder mehrere vorbestimmte Handlungsvorgaben, die verschiedenen vorbestimmten Stellen zugeordnet sind. Die Streckeninformationen können eine Vielzahl von Handlungsvorgaben umfassen, die jeweils einer oder mehreren Stellen zugeordnet sind. Eine vorbestimmte Handlungsvorgabe kann beispielsweise durch einen zweiten Benutzer als insbesondere behördliche Aufgabe bestimmt werden. Eine Handlungsvorgabe kann beispielsweise bestimmen, dass an der jeweiligen zugeordneten vorbestimmten Stelle, wie einem Brückenbauwerk, einem Tunnel, einem Mündungsbereich, einem Kreisverkehr oder einer Kreuzung, etc., dem Schwertransport und/oder wenigstens einem Begleitfahrzeug des Schwertransports vorgegeben wird, wo dieses bestimmte Transport- oder Begleitfahrzeug (gegebenenfalls eines von mehreren Fahrzeugen mit unterschiedlichen Rollen) zu positionieren ist. Alternativ oder zusätzlich kann eine Handlungsvorgabe beispielsweise bestimmen, dass an der jeweiligen zugeordneten vorbestimmten Stelle eine visuelle und/oder akustische Meldung angezeigt wird. Insbesondere kann der erste Benutzer einen, insbesondere initialen oder modifizierten, Transportdatensatz bereitstellen, der Streckeninformationen umfasst, die eine Handlungsvorgabe oder mehrere Handlungsvorgaben enthalten. Vorzugsweise kann der erste oder der wenigstens eine zweite Benutzer einen insbesondere modifizierten (zweiten, dritten, vierten,... n-ten) Transportdatensatz bereitstellen, dessen Streckeninformationen in Bezug auf wenigstens eine Handlungsvorgabe modifiziert sind.

Die Veränderung von Streckeninformationen kann eine abschnittsweise oder punktuelle Veränderung der Streckeninformationen sein. Insbesondere werden nur bestimmte Benutzer, vorzugsweise der erste Benutzer und/oder wenigstens ein zweiter Benutzer, dazu autorisiert, die Streckeninformationen in dem virtuellen Datenraum zu ändern. Besondere Beispiele für den Veränderungsvorgang der Streckeninformationen werden nachstehend noch ausführlicher beschrieben.

In einem konkreten Beispiel kann es vorkommen, dass Streckeninformationen, beispielsweise von einem Algorithmus zur Ermittlung (Erzeugung) eines Routenvorschlags, das Befahren eines bestimmten Brückenbauwerks vorschlägt, dass jedoch kurzfristig einer baulichen Maßnahme unterzogen wird daher für den Schwertransport nicht passierbar ist. In diesem Fall kann der erste Benutzer und/oder der wenigstens eine zweite Benutzer per Eingabe die Streckeninformationen so verändern, dass der Schwertransport dieses Brückenbauwerk gemäß der veränderten Streckeninformationen umfährt.

Optional kann ein Transportdatensatz Statusinformationen umfassen. Es kann zweckmäßig sein, dass die mit dem Transportdatensatz assoziierte Statusinformationen einen Antragsstatus definieren. Der Antragstatus kann insbesondere ausgewählt sein aus einer Liste umfassend oder bestehend aus einem Vorbereitungsstatus, einem Anhängigkeitsstatus, einen Zurücknahmestatus, einem insbesondere behördlichen Bearbeitungsstatus, einem insbesondere behördlichen Beanstandungsstatus, einem insbesondere behördlichen Bewilligungsstatus und/oder einem insbesondere behördlichen Ablehnungsstatus.

Insbesondere kann der virtuelle Datenraum dergestalt konfiguriert sein, dass nur ein vorbestimmter erster oder zweiter Benutzer, oder eine vorbestimmte Gruppe von insbesondere zweiten Benutzern, autorisiert ist, dem Transportdatensatz wenigstens eine vorbestimmte Statusinformation, insbesondere wenigstens ein vorbestimmter Antragsstatus, zuzuordnen. Gemäß einem Beispiel kann einzig der erste Benutzer autorisiert sein, dem Transportdatensatz einen Vorbereitungsstatus, einem Anhängigkeitsstatus und/oder einen Zurücknahmestatus zuzuordnen. Beispielsweise kann nur der wenigstens eine zweite Benutzer autorisiert sein, dem Transportdatensatz einen insbesondere behördlichen Beanstandungsstatus, einen insbesondere behördlichen Bewilligungsstatus und/oder einen insbesondere behördlichen Ablehnungsstatus zuzuordnen.

Gemäß einer bevorzugten Ausführung umfasst das Verfahren zum Optimieren eines Großraum- und/oder Schwertransports das Bereitstellen einer digitalen Karte in dem virtuellen Datenraum, wobei die digitale Karte die Streckeninformationen abbildet. Im virtuellen Datenraum können beispielsweise der Startpunkt, Zielpunkt, weitere Stellen und/oder Streckenabschnitte in der digitalen Karte grafisch dargestellt werden. Ein kartographisches Darstellen oder eine kartographische Darstellung wie hierin verwendet bezieht sich auf einen Vorgang oder dessen Ergebnis, Informationen geographisch referenziert in einer digitalen Karte darzustellen.

Insbesondere werden dabei Verkehrsbauwerke, einschließlich Straßen, in der digitalen Karte geographisch referenziert dargestellt. Die digitale Karte kann basierend von Geobasisdaten und Geofachdaten generiert werden und/oder von einem Kartendienst erhalten werden. Beispielsweise kann die digitale Karte, und/oder die interaktive digitale Karte wie nachstehend erläutert, durch das kommerziell erhältlichen Produkt der Serie AGNES (eingetragene Marke) der Sommer Gruppe bereitgestellt sein.

Eine digitale Karte kann eine digitale, verkleinerte Darstellung eines geographischen oder topographischen Gebietes abbilden. Vorzugsweise werden die Streckeninformationen eingebettet in der digitale, verkleinerte Darstellung eines geographischen oder topographischen Gebietes dargestellt. Das in der Karte dargestellte Gebiet kann vordefiniert sein. Beispielsweise kann die Karte das Gebiet der Bundesrepublik Deutschland, von Europa, oder ein beliebiges anderes Gebiet der Welt darstellen. Die Karte kann beispielsweise Straßen, Wege, Bahnlinien, Verläufe von Gewässern, Höhenprofile, politische oder sonstige Gebietsgrenzen beinhalten. Beispielsweise kann die Karte zwischen unterschiedlichen Straßentypen grafisch differenzieren. Beispielsweise Straßentypen umfassen Autobahnen, autobahnähnliche Stra-ßen, Fernverkehrsstraßen, Straßen, Autostraßen, Europa-, Bundes-, Land-, Staats-, Kreis-, Gemeinde- und Ortsstraßen, Ortsdurchfahrt, Feld- und Waldwege, Fahrradwege, Fußwege und/oder Fußgängerzonen. Des Weiteren können die Straßen nach Straßenkategorien, nach Straßenbaulastträger oder nach gesetzlichen Regelungen eingeteilt sein.

Die Karte wird als eine digitale Karte bereitgestellt. Die Karte kann eine Rasterkarte oder eine Vektorkarte sein. Die Karte kann insbesondere als online-Karte in dem virtuellen Datenraum von einem und/oder über ein Netzwerk, von einem Server, von einem Cloudspeicher oder sonstigen Einrichtungen abgerufen werden. Die Karte kann als eine einzige Karte bereitgestellt werden und/oder sich aus mehreren Karten oder Kartenabschnitten zusammengesetzt werden.

Gemäß einer Weiterbildung des Verfahrens zum Optimieren eines Großraum- und/oder Schwertransports wird die in dem virtuellen Datenraum bereitgestellte digitalen Karte unter Berücksichtigung der Schwertransportdaten dargestellt. Beispielsweise können in der digitalen Karte solche Straßen, Wege, Bahnlinien, Verläufe von Gewässern zumindest abschnittsweise unter Bezugnahme auf die Schwertransportdaten des gegenständlichen Schwertransports gekennzeichnet sein. Bevorzugt können in der digitalen Karte solche Straßen, Wege, Bahnlinien, Verläufe von Gewässern zumindest abschnittsweise gekennzeichnet, insbesondere hervorgehoben, werden, die mit den Schwertransportdaten des gegenständlichen Schwertransports kompatibel sind.

Gemäß einer Weiterbildung des Verfahrens zum Optimieren eines Großraum- und/oder Schwertransports, die mit der vorigen kombinierbar ist, werden die Streckeninformationen durch den ersten Benutzer und/oder durch den wenigstens einen zweiten Benutzer mittels der digitalen Karte modifiziert. Insbesondere kann der erste Benutzer den Startpunkt und den Zielpunkts insbesondere im virtuellen Datenraum insbesondere mittels der digitalen Karte bestimmen. Beispielsweise können Stellen, wie der Startpunkt, der Zielpunkt, einer oder Zwischenpunkte und/oder Streckenabschnitte auf der Karte, zum Beispiel über einen Touchscreen, durch einen Benutzer ausgewählt werden.

Gemäß einer Ausführungsform wird in dem virtuellen Datenraum als digitale Karte eine interaktive digitale Karte bereitgestellt, die eingerichtet ist, Benutzereingaben zur Veränderung der Streckeninformationen gemäß eines Routenvorschlags in einer interaktiven Art und Weise kartographisch wiederzugeben. Der Ausdruck "interaktiv" wie hierin verwendet bezieht sich darauf, dass der Benutzer, das heißt, der erste Benutzer und/oder der wenigstens eine zweite Benutzer, eine Eingabe bezüglich einer maschinell dargestellten Information tätigen kann, woraufhin eine Maschine, z.B. eine Computereinrichtung, die dargestellte Information gemäß der Eingabe verändert und die veränderte Information wiedergibt. Somit bietet das Verfahren den Benutzern die Möglichkeit, Streckeninformationen in der kartographischen Darstellung in der digitalen Karte zu verändern und modifizieren, wobei insbesondere das Ergebnis unmittelbar (d.h. in Echtzeit oder in nahezu Echtzeit) für den oder die Benutzer dargestellt werden kann. Dadurch werden die Prozesse für die Einrichtung, Steuerung, Prüfung und Durchführung des Schwertransports vereinfacht.

Der Routenvorschlag bezieht sich auf eine konkrete Route von einem Startpunkt zu einem Zielpunkt, die für die Durchführung des Schwertransports vorgeschlagen wird. Der Routenvorschlag kann anhand der kartographischen Darstellung der Teilmenge der Verkehrsbauwerke in der digitalen Karte erzeugt werden. Beispielsweise kann ein Algorithmus eine kürzeste Route, eine schnellste Route, eine Route mit am wenigsten Steigungen, eine am wenigsten befahrene Route oder dergleichen erstellen. Eine solche automatisch erstellte Route kann von einem Benutzer bestätigt und als ein Bestandteil der der Streckeninformationen bestimmt werden. Zusätzlich oder alternativ kann der erste Benutzer und/oder der wenigstens eine zweite Änderungen an einem automatisch generierten Routenvorschlag vornehmen und das Ergebnis kann als Bestandteil eines initialen oder modifizierten Transportdatensatzes bestimmt werden.

Somit dient die interaktive digitale Karte nicht nur der kartographischen Darstellung der Streckeninformationen, sondern bietet den Benutzern die Möglichkeit, die Streckeninformationen kontinuierlich oder schrittweise zu verändern. Insbesondere wird bei der Veränderung und Modifizierung der Streckeninformationen durch den Benutzer in der interaktiven digitalen Karte stets auf die vorstehend beschriebene Kollisionsgefahr und sonstige Risiken unter Berücksichtigung der Schwertransportdaten geprüft. Dadurch können die Streckeninformationen optimal vorbereitet werden.

Das Verändern oder Modifizieren der Streckeninformationen durch den Benutzer kann insbesondere eine abschnittsweise oder kontinuierliche Veränderung des in der digitalen Karte kartographisch dargestellten Streckeninformationen umfassen. Hierin werden, sofern nicht anders angegeben, die Ausdrücke Verändern und Modifizieren gleichbedeutend und austauschbar verwendet.

Insbesondere umfasst das Verfahren ferner das Empfangen einer Benutzereingabe zur Veränderung der Streckeninformationen in der digitalen Karte; kartographisches Darstellen der gemäß der Benutzereingabe modifizierten Streckeninformationen; und Bereitstellen der modifizierten (zweiten, dritten... n-ten) Streckeninformationen auf Basis der vormals geltenden (ersten, zweiten, (n-1)-ten) Streckeninformationen. Diese expliziten Schritte beschreiben die Verwendung der interaktiven digitalen Karte zur Veränderung der Streckeninformationen. Die gemäß der Eingabe des Benutzers modifizierten (veränderten) Streckeninformationen treten anstelle der bisherigen Streckeninformationen. Die Schritte können beliebig wiederholt werden, bis Streckeninformationen erstellt worden sind, die von dem insbesondere zweiten Benutzer bestätigt wird, vorzugsweise durch Bereitstellen von modifizierten Streckeninformationen, die assoziiert sind mit einem insbesondere behördlichen Bewilligungsstatus und/oder einem insbesondere behördlichen Ablehnungsstatus.

Bei einer bevorzugten Ausführung des Verfahrens zum Optimieren eines Großraum- und/oder Schwertransports wird eine URI-Adresse (Uniform Resource Identifier), wie eine URL (Uniform Resource Locator), beispielsweise ein Hyperlink, ein API-Endpunkt, eine Web-Socket-URL, ein FTP-Link (File-Transfer-Protocol), oder ein URN (Uniform Resource Name) oder ähnliches, an den wenigstens einen zweiten Benutzer übermittelt. Das Verfahren kann eine Authentifizierung des wenigstens einen zweiten Benutzers umfassen, bevor dieser zweite Benutzer auf den virtuellen Datenraum, insbesondere die in dem virtuellen Datenraum bereitgestellten Streckeninformationen zuzugreifen autorisiert wird, insbesondere für einen Lese- und/oder Schreibzugriff. Das Authentifizieren des zweiten Benutzers kann durch eine örtliche und/oder zeitlich begrenzte Zugangsberechtigung eingeschränkt werden. Der wenigstens eine zweite Benutzer greift vermittels der URI-Adresse, beispielsweise des Hyperlinks, auf den virtuellen Datenraum zu. Der zweite Benutzer kann insbesondere über einen Webbrowser auf den virtuellen Datenraum zugreifen. Das hat den Vorteil, dass der zweite Benutzer keine spezielle Software auf seinem Endgerät benötigt, um sich an dem Verfahren zu beteiligen. Vorzugsweise werden dem wenigstens einen zweiten Benutzer Zugangsdaten zum Zugreifen auf den virtuellen Datenraum über gesonderten Kommunikationsweg übermittelt. Als gesonderter Kommunikationsweg wird insbesondere ein von dem zum Übermitteln der URI-Adresse, beispielsweise des Hyperlinks, verwendeten Kommunikationsweg unterschiedlicher Kommunikationsweg verwendet.

Gemäß einer Ausführung des Verfahrens zum Optimieren eines Großraum- und/oder Schwertransports erfolgen Zugriffe auf den virtuellen Datenraum durch mehrere zweite Benutzer. Die mehreren zweiten Benutzer greifen zum Bereitstellen jeweiligen modifizierten Transportdatensatzes auf den virtuellen Datenraum zu. Der wenigstens eine oder die mehreren zweiten Prüfer können eine Zulässigkeitsprüfung eines von einem ersten Benutzer bereitgestellten, insbesondere initialen oder modifizierten, Transportdatensatzes oder eines von einem zweiten Benutzer bereitgestellten modifizierten Transportdatensatzes durchführen. Das Bereitstellen eines (neuen) modifizierten Transportdatensatzes durch einen der mehreren zweiten Benutzer kann insbesondere einem Ergebnis einer durchgeführten Zulässigkeitsprüfung entsprechen. Den mehreren zweiten Benutzern können unterschiedliche, vorzugsweise individuelle, Identifikatoren zugeordnet werden. Ein Transportdatensatz kann durch einen der zweiten Benutzer insbesondere unter Verwendung einer in dem virtuellen Datenraum bereitgestellten digitalen Karte modifiziert werden.

Insbesondere können die mehreren zweiten Benutzer Benutzereingaben über die vorstehend erläuterte interaktive digitale Karte in dem virtuellen Datenraum tätigen, um modifizierte Transportdatensätze bereitzustellen. Somit kann das computerimplementierte Verfahren eingerichtet sein, die Änderungen durch die mehreren zweiten Benutzer kartographisch darzustellen und wiederzugeben. Durch Bereitstellung des jeweiligen modifizierten Transportdatensatzes in dem virtuellen Datenraum, auf den auch die anderen zweiten Benutzer zugreifen können, werden die Prozesse um den Schwertransport erheblich beschleunigt und weniger fehleranfällig gemacht.

Das Verfahren kann es den mehreren zweiten Benutzern ermöglichen, Transportdatensätze, insbesondere deren Streckeninformationen, sukzessive zu modifizieren. Es ist denkbar, dass mehrere Benutzer, insbesondere mehrere zweite Benutzer, zeitgleich Lesezugriff auf einen Transportdatensatz in dem virtuellen Datenraum haben. Es kann bevorzugt sein, dass zu jeder gegebenen Zeit nur ein einziger zweiter Benutzer, insbesondere nur ein einziger Benutzer, über Schreibzugriff auf den virtuellen Datenraum verfügt. Insbesondere kann bei dem Verfahren vorgesehen sein, dass zwischen Schreibzugriffen verschiedener insbesondere zweiter Benutzer auf den virtuellen Datenraum, insbesondere zum Bereitstellen eines modifizierten Transportdatensatzes vorzugsweise mit modifizierten Streckeninformationen, ein Zeitabstand von wenigstens 1 Sekunde, insbesondere wenigstens 2 Sekunden, wenigstens 10 Sekunden, wenigstens 30 Sekunden verstreichen muss. Der kürzest zulässige Zeitabstand kann auf weniger als 10 Minuten, insbesondere weniger als 5 Minuten, begrenzt sein.

Gemäß einer Ausführung des Verfahrens zum Optimieren eines Großraum- und/oder Schwertransports kann vorgesehen sein, dass nur ein bestimmter zweiter Benutzer, insbesondere ein einziger bestimmter zweiter Benutzer, dazu befähigt ist, einen hinsichtlich des wenigstens der Statusinformationen modifizierten Transportdatensatz bereitzustellen. Der einzige zum Modifizieren von Statusinformationen autorisierte zweite Benutzer kann beispielsweise ein übergeordneter zweiter Benutzer sein. Der übergeordnete zweite Benutzer sei insbesondere einer zentrale Prüfeinrichtung zugeordnet, die beispielsweise in Hof im Bundesland Bayern ihren Sitz hat und als Sammelstelle für Genehmigungsanträge für Schwertransporte den Transportdatensatz im virtuellen Datenraum zur Einsicht erhält. Der übergeordnete zweite Benutzer kann mit anderen zweiten Benutzern in dem virtuellen Datenraum kommunizieren, indem die verschiedenen zweiten Benutzer in dem virtuellen Datenraum jeweils modifizierte Transportdatensätze bereitstellen und/oder damit assoziierte Informationen bereitstellen. Den anderen zweiten Benutzern können regionale Zuständigkeiten beispielsweise für einzelne Bundesländer zugeordnet sein.

Bei einer Weiterbildung des Verfahrens zum Optimieren eines Großraum- und/oder Schwertransports werden die Streckeninformationen in mehrere Streckenabschnittsinformationen unterteilt. Die mehreren Streckenabschnittsinformationen werden verschiedenen zweiten Benutzer zugeordnet. Die verschiedenen zweiten Benutzer werden nur in Bezug auf den oder die ihnen zugeordneten Streckenabschnittsinformationen befähigt, einen hinsichtlich dieser Streckenabschnittsinformationen modifizierten Transportdatensatz bereit zu stellen. Beispielsweise kann ein übergeordneter zweiter Benutzer autorisiert werden, die Streckeninformationen eines Transportdatensatzes räumlich in vollem Umfang zu modifizieren. Es kann zweckmäßig sein, dass ein anderer zweiter Benutzer nur in eingeschränktem räumlichen Umfang zum Modifizieren eines Transportdatensatzes autorisiert wird. Für verschiedene zweite Benutzer kann eine jeweilige räumliche Zuständigkeit festgelegt werden, die auf ein bestimmtes, beispielweise politisches oder geographisches Gebiet, begrenzt ist. Beispielsweise kann einem bestimmten zweiten Benutzer das Gebiet des Bundeslandes Bayern, einem anderen bestimmten zweiten Benutzer das Gebiet des Bundeslandes Hessen, und einem weiteren bestimmten zweiten Benutzer das Gebiet des Bundeslandes Nordrhein-Westphalen zugeordnet werden. Der jeweilige Benutzer kann in dem virtuellen Datenraum einen Transportdatensatz in Bezug auf die Streckeninformationen, insbesondere Streckenabschnittsinformationen, modifizieren, die zu der ihm zugeordneten räumlichen Zuständigkeit korrespondieren. Beispielsweise kann ein zweiter Benutzer, dem das Gebiet des Bundeslandes Bayern zugeordnet ist, die Streckeninformationen, insbesondere Handlungsvorgaben und/oder durch den Schwertransport zu passierende Stellen, nur innerhalb des ihm zugeordneten begrenzten Umfangs modifizieren.

Es ist denkbar, dass die Zuständigkeit eines bestimmten zweiten Benutzers sich über ein gesamtes politisches oder geographisches Gebiet, wie z.B. über die gesamte Bundesrepublik Deutschland, erstreckt. Der Schwertransports kann dergestalt sein, dass der Startpunkt und der Zielpunkt des Schwertransports in verschiedenen politischen oder geographischen Gebieten, beispielsweise in verschiedenen Bundesländern, liegen. Mit anderen Worten kann der Schwertransport gegebenenfalls eine oder mehrere Ländergrenzen überqueren. Somit kann die Route (der Streckeninformationen) des Schwertransports in mehrere Abschnitte (Streckenabschnittsinformationen) unterteilt sein, wobei jeder dieser Abschnitte einem jeweiligen einzelnen politischen oder geographischen Gebiet zugeordnet ist. Ein jeweiliger bestimmter zweiter Benutzer ( (Teil-)Prüfeinrichtung) kann für jedes dieser politischen oder geographischen Gebiete zuständig sein, d.h. ein jeweiliges Zuständigkeitsgebiet aufweisen.

Gemäß einer Ausführungsform umfassen die mehreren zweiten Benutzer mehrere bestimmte zweite Benutzer, die individuell ein jeweiliges Zuständigkeitsgebiet aufweisen oder ist damit verknüpft werden. Nach dem Bereitstellen eines Transportdatensatzes an den virtuellen Datenraum kann es den mehreren zweiten Benutzern ermöglicht werden, in ihrem jeweiligen Zuständigkeitsgebiet eine oder mehrere Änderungen an dem Transportdatensatz vorzunehmen. Jede einzelne Modifizierung an dem Transportdatensatz durch einen der mehreren zweiten Benutzer kann an den virtuellen Datenraum als jeweils modifizierter Transportdatensatz für die anderen der zweiten Benutzer und gegebenenfalls den ersten Benutzer bereitgestellt werden.

Insbesondere können mehrere Zuständigkeitsgebiete (z.B. mehrere Bundesländer der Bundesrepublik Deutschland) der mehreren zweiten Benutzer dergestalt sein, dass sich nicht überlappen. In einem konkreten Beispiel wird ein übergeordneter zweiter Benutzer einer Prüfeinrichtung des Bundes zugeordnet und die mehreren anderen zweiten Benutzer werden regionalen Prüfeinrichtungen oder Landesprüfeinrichtungen zugeordnet.

Dabei ist es möglich, dass die Veränderung des Transportdatensatzes durch einen der mehreren zweiten Benutzer auf das Zuständigkeitsgebiet wenigstens eines anderen zweiten Benutzers ausstrahlt, wobei sich gegebenenfalls der Startpunkt (Eingangsstelle) oder der Endpunkt (Austrittsstelle) für das Zuständigkeitsgebiet des anderen der zweiten Benutzer verändert. Vor diesem Hintergrund kann das computerimplementierte Verfahren eine deutliche Senkung des Arbeit-, Zeit- und Kostenaufwands für die Prozesse um den Schwertransport bieten.

Gemäß einer Ausführung des Verfahrens zum Optimieren eines Großraum- und/oder Schwertransports wird aus dem virtuellen Datenraum ein, insbesondere initialer oder modifizierter, Transportdatensatz gemäß einer vorbestimmten maschinenlesbaren Datenstruktur exportiert wird. Alternativ oder zusätzlich kann das Bereitstellen eines, insbesondere initialen oder modifizierten, Transportdatensatzes an den virtuellen Datenraum durch importieren dieses Transportdatensatzes in dem vorbestimmten maschinenlesbaren Datenstruktur durchgeführt werden.

Insbesondere kann der Transportdatensatz in der vorbestimmten Datenstruktur in einer Auszeichnungssprache (Markup Language, ML) bereitgestellt werden. Die Datenstruktur kann in einem Format vorliegen, das sowohl von einem menschlichen Benutzer als auch von einer Computereinrichtung lesbar ist. Beispiele für die Auszeichnungssprache umfassen insbesondere Procedural Markup Language (PML), wie z.B. TeX, PDF, Postscript und PCL, und jede beliebige Descriptive Markup Language (DML), wie z.B. SGML, XML, HTML, Doc-Book, TEI, MathML, WML oder SVG. Diese Beispiele sind nicht abschließend und grundsätzlich kommt jede beliebige Maschinensprache in Betracht, die für die digitale Darstellung einer Zeichenfolge in einem elektronischen Dokument geeignet ist.

Eine Zeichenfolge wie hierin verwendet kann ein einzelnes Zeichen oder eine endliche Folge von mehreren Zeichen umfassen. Ein Zeichen kann insbesondere ein alphanumerisches Zeichen sein. Ferner kann das Zeichen ein Zeichen einer beliebigen Fremdsprache sein. Die Zeichenfolge kann dem englischen Fachbegriff "String" entsprechen. Die Zeichenfolge kann insbesondere eingerichtet sein, in einem elektronischen Dokument (insbesondere in einem Online-Formular) als solches dargestellt zu werden. Beispiele für ein elektronisches Dokument umfassen grundsätzlich jedes elektronische Dokument in einer geeigneten Maschinen- oder Auszeichnungssprache, insbesondere ein XML-Dokument, ein HTML-Dokument und ein PDF-Dokument.

In einem konkreten Beispiel kann der Transportdatensatz in einer vorbestimmten Datenstruktur verwendet werden, insbesondere exportiert und/oder importiert werden, die kompatibel mit dem Datenformat des sogenannten Verfahrensmanagements für Großraum- und Schwertransport, kurz VEMAGS (eingetragene Marke), eingerichtet ist. Beispielsweise wird von dem VEMAGS-System ein elektronisches Dokument als ein Online-Antragsformular zum Ausfüllen durch einen Benutzer verwendet. Ein derartiges elektronische Dokument kann wie vorstehend erläutert unter Verwendung einer Auszeichnungssprache, insbesondere in XML oder einer verwandten Sprache, importiert und/oder exportiert werden. Die Umwandlung eines Transportdatensatzes in einen zweiten Datensatz mit der vorbestimmten Datenstruktur kann verwendet werden, um ein ausgefülltes VEMAGS-Formular zu generieren.

Einer weitere Ausführung des Verfahrens zum Optimieren eines Großraum- und/oder Schwertransports umfasst das Bereitstellen einer mit dem Transportdatensatz assoziierten Information an den virtuellen Datenraum durch den wenigstens einen ersten Benutzer und/oder den wenigstens einen zweiten Benutzer. Als mit dem Transportdatensatz assoziierte Information kann beispielsweise eine Mitteilung, wie eine Textnachricht, insbesondere eine Freitextnachricht, von dem jeweiligen ersten oder zweiten Benutzer erzeugt und in dem virtuellen Datenraum bereitgestellt werden. Die in dem virtuellen Datenraum bereitgestellte, mit dem Transportdatensatz assoziierte Information kann durch wenigstens einen insbesondere bestimmten anderen ersten und/oder zweiten Benutzer in dem virtuellen Datenraum abgerufen werden, insbesondere gelesen werden. Auf diese Weise können zwei oder mehr Benutzer in dem virtuellen Datenraum miteinander kommunizieren, wobei diese Kommunikation keinen integralen Teil des Transportdatensatzes oder der Transportdatensätze bildet. Beispielsweise kann ein zweiter Benutzer mittels der assoziierten Information Fragen, Antworten, Detailinformationen, Kommentare oder Hinweise zum möglichen Umgang mit Modifikationen oder Problemen in Bezug auf einen Transportdatensatz in dem virtuellen Datenraum bereitstellen.

Die Erfindung betrifft auch ein Verfahren zum Durchführen eines Großraum- und/oder Schwertransports (Transportverfahren). Das Verfahren zum Durchführen eines Großraum- und/oder Schwertransports umfasst das oben beschriebene Verfahren zum Optimieren eines Großraum- und/oder Schwertransports (Optimierungsverfahren). Im Zuge des Transportverfahrens wird das Optimierungsverfahren durchgeführt, um einen modifizierten Transportdatensatz zu erzeugen, wobei dieser modifizierte Transportdatensatz vorzugsweise Streckeninformationen umfasst, die assoziiert sind mit einem insbesondere behördlichen Bewilligungsstatus. Gemäß dem erfindungsgemäßen Verfahren zum Durchführen eines Großraum- und/oder Schwertransports verkehrt ein Schwertransportfahrzeug entlang der Strecke, die zu einem mit dem Verfahren erzeugten, modifizierten Transportdatensatz korrespondiert. Bevorzugt verkehrt das Schwertransportfahrzeug, welches zumindest streckenabschnittsweise von einem oder mehreren Begleitfahrzeugen begleitet werden kann, auf der Strecke entsprechend zu dem modifizierten Transportdatensatz. Das Bereitstellen des modifizierten Transportdatensatzes, welcher die Strecke definiert, entlang welcher der Transport durchgeführt wird, erfolgt vorzugsweise, bevor das Transportfahrzeug, insbesondere in einem Fahrzeugverband mit einem oder mehreren Begleitfahrzeugen, entlang dieser vorbestimmten Strecke verkehrt.

Um die Sicherheit für Schwertransporte und andere Verkehrsteilnehmer zu erhöhen, können Transportfahrzeuge beim Durchführen des Transportverfahrens von einem oder mehreren Begleitfahrzeugen begleitet werden. Mithilfe des Begleitfahrzeugs oder der Begleitfahrzeuge erfolgt ein besonderes Kenntlichmachen des Schwertransports. Das Schwertransportfahrzeug und dessen Begleitfahrzeug oder Begleitfahrzeuge bilden einen Fahrzeugverband. Das wenigstens ein Begleitfahrzeug kann zur Wahrnehmung hilfspolizeilicher Aufgaben eingesetzt werden. Beispielsweise können mit einem Begleitfahrzeug Verkehrszeichen für andere, insbesondere nachfolgende und/oder entgegenkommende, Verkehrsteilnehmer angezeigt werden. Zusätzlich oder alternativ kann ein Begleitfahrzeug dazu eingesetzt werden, einen Zufahrtsweg zu der vorbestimmten Strecke, auf welcher sich der Schwertransport bewegt, zeitweise zu versperren. Bei dem Verfahren kann der Transportdatensatzes, insbesondere die Streckeninformationen, definieren, dass das Transportfahrzeug zumindest streckenabschnittsweise in einem Fahrzeugverband verkehrt. Dabei kann der Transportdatensatzes, insbesondere die Streckeninformationen, bestimmen, dass Verband wenigstens ein Begleitfahrzeug zum Absichern des Transportfahrzeugs oder bestimmter Stellen entlang der Route und/oder zum Warnen von anderen Verkehrsteilnehmern umfasst, Zu diesem Zweck kann der Transportdatensatz, insbesondere die Streckeninformationen, eine oder mehrere Handlungsvorgaben umfassen, die das Verkehren in einem Fahrzeugverband bestimmen. Zusätzlich oder alternativ können die Handlungsvorgaben die Anzahl von Begleitfahrzeugen und/oder vorbestimmte Positionen und/oder vorbestimmte, insbesondere akustische und/oder visuelle, Anzeigeinhalte für die Begleitfahrzeuge definieren.

Das hierin offenbarte computerimplementierte Verfahren ermöglicht, die Prozesse betreffend insbesondere die Einrichtung, Steuerung, Prüfung und Durchführung eines Schwertransports automatisch und einheitlich durchzuführen. Auf diese Weise werden die Prozesse betreffend den Schwertransport vereinfacht. Dadurch können Arbeits-, Zeit- und Kostenaufwand für den Schwertransport gesenkt werden. Insbesondere können die Stellung eines Antrags auf die Genehmigung des Schwertransports sowie eine Prüfung durch Prüfeinrichtungen wesentlich erleichtert werden, wobei die Verkehrsinfrastruktur vor Schäden oder übermäßige Belastung geschützt wird.

Das computerimplementierte Verfahren kann als eine Zusammenstellung von Anweisungen (Instruktionen) bereitgestellt sein, die durch mehrere Computereinrichtungen in einem verteilten System ausführbar sind. Die Computereinrichtung wie hierin verwendet kann eine Vorrichtung mit einer Datenverarbeitungskapazität sein, die zur Ausführung des hierin offenbarten computerimplementierten Verfahrens geeignet ist. Mit anderen Worten ist die Computereinrichtung mit einer Rechenleistung (oder Prozessorleistung) ausgestattet, die ausreichend für die Ausführung des computerimplementierten Verfahrens ist.

Das verteilte System wie hierin verwendet bezeichnet ein verteiltes System gemäß den Lehren der Informatik. Demnach kann ein verteiltes System einen Zusammenschluss unabhängiger Computereinrichtungen bezeichnen, sodass die unabhängigen Computereinrichtungen ein einziges System für einen Benutzer oder mehrere darstellen. Alternativ oder zusätzlich kann ein verteiltes System eine Menge interagierender Prozesse oder Prozessoren sein, die über keinen gemeinsamen Speicher verfügen und über Nachrichten miteinander kommunizieren. Ferner kann das verteilte System hierin gemäß den Lehren aus den Gebieten des Verteilten Rechnens oder der verteilten Verarbeitung (Distributed Computing) verstanden und verwendet werden.

Die Computereinrichtung oder die mehreren Computereinrichtungen des verteilten Systems können mit einem elektronischen Speicher ausgestattet sein, der zum Zwischen- oder dauerhaften Speichern des computerimplementierten Verfahrens als Ganzes geeignet ist, und/oder zum Zwischen- oder dauerhaften Speichern von Daten zur Ausführung des computerimplementierten Verfahrens geeignet ist.

Das computerimplementierte Verfahren kann so bereitgestellt sein, dass es ausführbar in einem verteilten System ist. Insbesondere kann das computerimplementierte Verfahren einen ersten Teil für die Bereitstellung des virtuellen Datenraums aufweisen, einen zweiten Teil für das Zugreifen des ersten Benutzers auf den virtuellen Datenraum, und einen dritten Teil für das Zugreifen des wenigstens einen zweiten Benutzers auf den virtuellen Datenraum.

Der erste Teil, der zweite Teil und der dritte Teil können für die Ausführung in einem verteilten System konfiguriert sein. Der zweite Teil des computerimplementierten Verfahrens kann computerausführbare Funktionen speziell für einen Antragsteller enthalten. Der dritte Teil des computerimplementierten Verfahrens kann computerausführbare Funktionen speziell für eine Prüfeinrichtung enthalten. Es ist zu beachten, dass das computerimplementierte Verfahren so bereitgestellt werden kann, dass es sowohl den ersten Teil und den zweiten Teil als auch den dritten Teil enthält oder je nach Benutzer und Anwendertyp den ersten Teil, den zweiten Teil oder den dritten Teil für den jeweiligen Verwendungszweck bereitstellt.

Das verteilte System kann dazu eingerichtet sein, das Optimierungsverfahren auszuführen. Insbesondere kann das verteilte System wie vorstehend erläutert ausgestaltet sein. Das verteilte System kann mehrere Computereinrichtungen umfassen. Die Computereinrichtungen können PCs, mobile Endgeräte und/oder mobile Computereinrichtungen wie Tablets umfassen.

Das Optimierungsverfahren kann optional umfassen, dass durch den ersten Benutzer und/oder den wenigstens einen zweiten Benutzer eine Prüfung veranlasst wird, ob Einschränkungsdaten zu Verkehrsbauwerken mit den Transportdaten des Schwertransports kompatibel sind. Diese Kompatibilitätsprüfung kann auch als eine Kollisionsprüfung bezeichnet werden. Insbesondere kann der erste Benutzer eine Kompatibilitätsprüfung (Vorprüfung) außerhalb des virtuellen Datenraums durchführen und basierend auf deren Ergebnis einen initialen Transportdatensatz erzeugen und diesen an den virtuellen Datenraum bereitstellen. Der wenigstens eine zweite Benutzer kann insbesondere außerhalb des virtuellen Datenraums eine Kompatibilitätsprüfung (behördliche Kompatibilitätsprüfung) durchführen und basierend auf deren Ergebnis einen modifizierten Transportdatensatz erzeugen und diesen an den virtuellen Datenraum bereitstellen. Optional können der erste und/oder der wenigstens zweite Benutzer eine Kompatibilitätsprüfung in dem virtuellen Datenraum durchführen und basierend auf deren Ergebnis einen weiteren oder mehrere weitere modifizierten Transportdatensatz erzeugen und im virtuellen Datenraum bereitstellen.

Durch die Berücksichtigung von Einschränkungsdaten, die insbesondere durch eine dreidimensionale Abbildung einzelner Verkehrsbauwerke und der zugehörigen Umgebung wie nachstehend erläutert ergänzt werden können, kann ein, insbesondere initialer oder modifizierter, Transportdatensatz ermittelt werden, wodurch die Prozesse betreffend Einrichtung, Steuerung, Prüfung und Durchführung des Schwertransports verbessert werden. Insbesondere kann die Sicherheit für den Schwertransport gesteigert werden. Ferner können hierdurch der Arbeits-, Zeit- und Kostenaufwand um den Schwertransport gesenkt werden.

Dabei kann insbesondere überprüft werden, ob die Verkehrsbauwerke oder deren Einschränkungsdaten dergestalt sind, dass sie für den Schwertransport hinsichtlich der Maße, der Gesamtmasse, der Achslast(en) und des Kurvenverhaltens für das Befahren (oder für die Durchfahrt) geeignet sind oder eine Kollisionsgefahr für den Schwertransport darstellen. Das Ergebnis dieser Prüfung kann ergeben, dass das jeweilige Verkehrsbauwerk zulässig für eine normale Durchfahrt, eingeschränkt zulässig, d.h. Durchfahrt zulässig unter einer oder mehreren Auflagen (Handlungsvorgaben), oder gänzlich unzulässig ist. Beispielsweise kann die digitale Karte eingerichtet sein, nur diejenigen Verkehrsbauwerke (d.h. eine Teilmenge der Verkehrsbauwerke), die zulässig für die Durchfahrt oder eingeschränkt zulässig für den jeweiligen Schwertransport sind, kartographisch darzustellen oder zu markieren, beispielsweise hervorzuheben.

Verkehrsbauwerke können für die Abwicklung von gewöhnlichem Transport konstruiert sein und somit nur eingeschränkt für den gegebenen Schwertransport geeignet sein. Die Einschränkungsdaten, die zugehörig zu den jeweiligen Verkehrsbauwerken sind, enthalten Informationen über (mögliche) Einschränkungen für das Befahren und für die Durchfahrt der einzelnen Verkehrsbauwerke. Die Einschränkungsdaten können eine maximale Durchfahrtshöhe, eine maximale Durchfahrtsbreite, ein maximal zulässiger Wendekreis (Kurvenradius), ein maximal zulässiges Gesamtgewicht, eine maximal zulässige Achslast und/oder sonstige physische Einschränkung für die Durchfahrt oder das Befahren mit dem Schwertransport enthalten.

Somit variiert die Teilmenge der Verkehrsbauwerke abhängig von den Transportdaten. Beispielsweise nimmt die Anzahl der passierbaren Verkehrsbauwerke ab, je länger, je breiter, je höher und/oder je schwerer ein Schwertransport ist. Damit kann sich die Teilmenge der Verkehrsbauwerke für den Schwertransport verkleinern, je größer und/oder je schwerer der Schwertransport ist.

Das Ermitteln der Teilmenge der Verkehrsbauwerke und deren kartographische Darstellung in der digitalen Karte bewirken, ein Streckennetz eigens für den gegebenen Schwertransport zu erhalten, das gegenüber der Gesamtheit von Verkehrsbauwerken teils erheblich reduziert ist. Dadurch wird der Arbeits-, Zeit- und Kostenaufwand für die Erstellung der Streckeninformationen gesenkt. Dieser Vorteil wird insbesondere sowohl beim Antragsteller als auch bei einer prüfenden Behörde erzielt.

Ferner können die Einschränkungsdaten Informationen über die physische Beschaffenheit des jeweiligen Verkehrsbauwerks enthalten. Beispielsweise können die Einschränkungsdaten Informationen über die Form der Wölbung einer Tunneldecke oder einer Unterseite einer Unterführung enthalten (z.B. kann die Decke eines Tunnels oder einer Unterführung für einen Schwertransport mit einer bestimmten Höhe und Breite lediglich mittig durchgefahren werden). Beispielsweise können die Einschränkungsdaten Informationen über die Breite eines einzelnen Fahrstreifens eines Straßenabschnitts enthalten. Beispielsweise können die Einschränkungsdaten Informationen über einen zulässigen oder vorgeschriebenen Durchfahrtsbereich eines Brückenbauwerks enthalten (z.B. kann ein Brückenbauwerk für einen Schwertransport mit mehr als 40 Tonnen nur in einem Randbereich oder in einem mittleren Bereich passierbar sein). Beispielsweise können die Einschränkungsdaten Informationen über die Kurve eines Straßenabschnitts enthalten (z.B. kann ein Kreisverkehr von einem Schwertransport mit einer bestimmten Länge entweder gar nicht oder nur im Uhrzeigersinn passierbar sein). Dies sind freilich nur Beispiele für das Verständnis der Einschränkungsdaten. Die Einschränkungsdaten sind nicht auf diese Beispiele beschränkt.

Darüber hinaus können Einschränkungsdaten Informationen über Hindernisse in unmittelbarer Umgebung der jeweiligen Verkehrsbauwerke enthalten. Die Verkehrsbauwerke können durch die Beschaffenheit einer jeweiligen Umgebung eingeschränkt sein. Beispielsweise können sich technische Einrichtungen (z.B. Ampeln, Verkehrsschilder, Beleuchtungsanlagen, Lärmschutzwände, etc.), Bauwerke (Gebäude, Säulen, Fußgängerbrücken, etc.) und Bäume in unmittelbarer Nähe des jeweiligen Verkehrsbauwerks befinden, die gegebenenfalls ein Sicherheitsrisiko für das Passieren mit dem gegebenen Schwertransport darstellen können.

### KURZBESCHREIBUNG DER ZEICHNUNGEN

Die Erfindung wird anhand von einzelnen Ausführungsbeispielen in Verbindung mit den beiliegenden Zeichnungen ausführlich beschrieben.
- Fig. 1: zeigt eine schematische Darstellung einer Ausführung des Verfahrens zum Optimieren eines Großraum- und/oder Schwertransports.
- Fig. 2: zeigt eine schematische Darstellung einer anderen Ausführung des Verfahrens zum Optimieren eines Großraum- und/oder Schwertransports.
- Fig. 3: zeigt eine schematische Darstellung einer weiteren Ausführung des Verfahrens zum Optimieren eines Großraum- und/oder Schwertransports.
- Fig. 4: zeigt ein Ablaufdiagramm des Verfahrens zum Optimieren und Durchführen eines Großraum- und/oder Schwertransports gemäß einem Beispiel.
- Fig. 5: zeigt eine schematische Darstellung eines Schwertransports mit Transportdaten gemäß einem Beispiel.
- Fig. 6: zeigt eine schematische Darstellung eines verteilten Systems zur Ausführung eines computerimplementierten Verfahrens gemäß einem Beispiel.
- Fig. 7: zeigt eine schematische Darstellung von Veränderungsvorgängen von Streckeninformationen gemäß einem Beispiel.

### AUSFÜHRLICHE BESCHREIBUNG

In der nachfolgenden Beschreibung bevorzugter Ausführungen anhand der Figuren werden für dieselben oder ähnliche Elemente verschiedener Ausführungsformen dieselben oder ähnliche Bezugszeichen verwendet, um die Lesbarkeit zu vereinfachen.

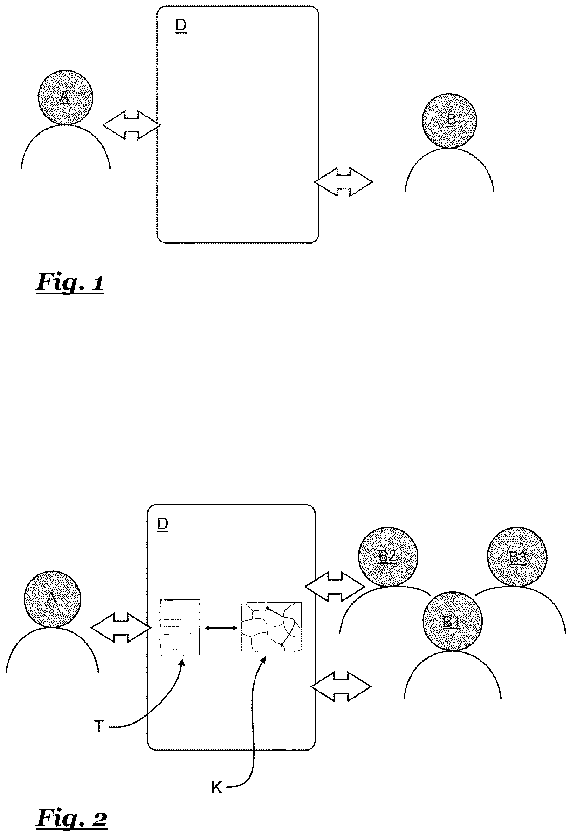

Fig. 1 zeigt eine schematische Darstellung eines Verfahrens zum Optimieren eines Großraum- und/oder Schwertransports. Das Verfahren umfasst das Bereitstellen eines virtuellen Datenraums D zur Kommunikation zwischen einem ersten Benutzer A und wenigstens einem zweiten Benutzer B.

Der erste Benutzer A, beispielsweise ein Antragssteller, ist autorisiert und befähigt auf den virtuellen Datenraum D zugreifen. Der erste Benutzer A verfügt über Berechtigungen zum Lese- und Schreibzugriff auf den virtuellen Datenraum D. Der erste Benutzer A kann schreibend auf den virtuellen Datenraum D zugreifen, um einen initialen Transportdatensatz bereitzustellen (nicht im Detail dargestellt). Zusätzlich oder alternativ kann der erste Benutzer A lesend auf den virtuellen Datenraum D zugreifen, um Transportdatensatz einzusehen, der von ihm selbst oder einem anderen Benutzer stammen. Der erste Benutzer A kann auch schreibend auf den virtuellen Datenraum D zugreifen, um einen modifizierten Transportdatensatz bereitzustellen.

Der zweite Benutzer B, beispielsweise eine Behörde oder Prüfungsstelle, ist autorisiert und befähigt auf den virtuellen Datenraum D zugreifen. Der zweite Benutzer B verfügt über Berechtigungen zum Lese- und Schreibzugriff auf den virtuellen Datenraum D.

Der zweite Benutzer B kann lesend auf den virtuellen Datenraum D zugreifen, um einen Transportdatensatz einzusehen, der vom ersten Benutzer A stammt. Der zweite Benutzer B kann schreibend auf den virtuellen Datenraum D zugreifen, um einen modifizierten Transportdatensatz bereitzustellen. Ferner kann der zweite Benutzer B auf den virtuellen Datenraum D zugreifen, um einen oder mehrere Transportdatensätze einzusehen, die von ihm selbst oder einem anderen Benutzer stammen.

Fig. 2 zeigt eine schematische Darstellung einer Ausführung der Verfahrens zum Optimieren eines Großraum- und/oder Schwertransports. Das Verfahren umfasst das Bereitstellen eines virtuellen Datenraums D zur Kommunikation zwischen einem ersten Benutzer A und mehreren zweiten Benutzern B1, B2, B3. Im Wesentlichen unterscheidet sich diese Ausführung von der zuvor beschriebenen nur durch die Anzahl der zweiten Benutzer B1, B2, B3. Die mehreren zweiten Benutzer B1, B2, B3 können beispielsweise einen übergeordneten zweiten Benutzer B1 und mehrere weitere zweite Benutzer B2, B3 mit unterschiedlichen räumlichen Zuständigkeitsbereichen, beispielsweise für unterschiedliche Bundesländer, darstellen.

In Fig. 2 ist symbolisch ein Transportdatensatz T dargestellt, der sich in dem virtuellen Datenraum D befindet. Ferner zeigt Fig. 2 symbolisch eine digitale Karte K, die zu dem Transportdatensatz T korrespondiert. Mit der digitalen Karte K können Streckeninformationen des Transportdatensatzes T zumindest streckenabschnittsweise abgebildet werden.

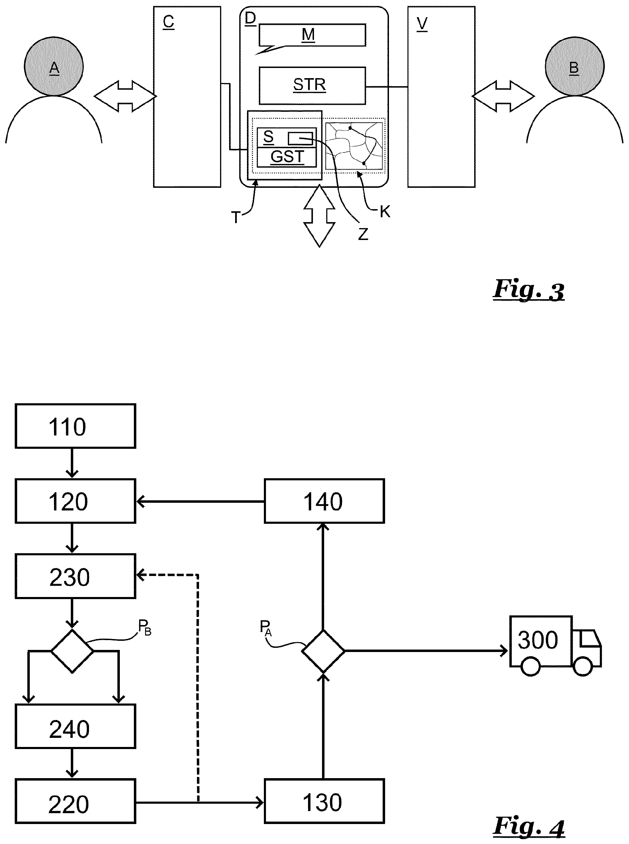

Fig. 3 zeigt eine weitere schematische Darstellung eines Verfahrens zum Optimieren eines Großraum- und/oder Schwertransports. Das Verfahren umfasst das Bereitstellen eines virtuellen Datenraums D zur Kommunikation zwischen einem ersten Benutzer A und wenigstens einem zweiten Benutzer B. Die Benutzer A, B können auf den virtuellen Datenraum D mit einer Anwendungs-Software C, V ("Client") mittels ihres jeweiligen Endgeräts oder auf anderem Wege auf den virtuellen Datenraum D zugreifen (durch den unten in Fig. 3 dargestellten Doppelpfeil symbolisiert), beispielsweise mittels einer URI-Adresse, beispielsweise eines Hyperlinks oder ähnlichem.

Der erste Benutzer A kann mittels einer ersten Anwendung C und eines ersten Endgeräts auf den virtuellen Datenraum D zugreifen. Als erste Anwendung C kann beispielsweise die Software AGNES (eingetragene Marke) der Sommer Group verwendet werden.

Der zweite Benutzer B kann mittels eines zweiten Endgeräts und eine zweite Anwendung V auf den virtuellen Datenraum D zugreifen. Als zweite Anwendung V kann beispielsweise die Software VEMAGS (eingetragene Marke) oder XVEMAGS (eingetragene Marke) verwendet werden.

Zum Abrufen oder Bereitstellen eines Transportdatensatzes T aus dem virtuellen Datenraum D kann der Transportdatensatz T gemäß einer vorbestimmten Datenstruktur STR bereitgestellt werden. Der Transportdatensatz T kann in der vorbestimmten Datenstruktur STR in den virtuellen Datenraum D importiert werden und/oder aus dem virtuellen Datenraum D exportiert werden.

Bei dem in Fig. 3 abgebildeten Beispiel umfasst der Transportdatensatz T Schwertransportdaten GST, Streckeninformationen S, Handlungsvorgaben Z und Statusinformationen. In dem virtuellen Datenraum D können außerdem mit einem Transportdatensatz T assoziierte Informationen M bereitgestellt werden. Der virtuelle Datenraum D enthält eine digitale Karte K. Mit der in dem virtuellen Datenraum D bereitgestellten digitalen Karte K werden die Streckeninformationen S unter Berücksichtigung der Schwertransportdaten GST des Transportdatensatzes T dargestellt wird. Mit der digitalen Karte K werden die Streckeninformationen S unter Berücksichtigung der Schwertransportdaten GST des Transportdatensatzes T dargestellt.

Alternativ oder zusätzlich umfasst jeder Transportdatensatz T einen Identifikator. Der Identifikator kann eindeutig einem der Benutzer zugeordnet sein. Vorzugsweise umfasst jeder Transportdatensatz T einen Identifikator, der demjenigen Benutzer zugeordnet ist, von dem dieser Transportdatensatz T an den virtuellen Datenraum D bereitgestellt wurde.

Alternativ oder zusätzlich umfasst jeder Transportdatensatz T individuelle Protokolldaten, wie einen Zeitstempel und/oder eine Versionsnummer. Die Protokolldaten können beispielsweise den Zeitpunkt dokumentieren, an dem der jeweilige Transportdatensatz T an den virtuellen Datenraum D bereitgestellt wurde. Alternativ oder zusätzlich können die Protokolldaten der jeweiligen Transportdatensatz T von anderen, insbesondere älteren, Transportdatensätzen T eindeutig unterscheiden. Beispielsweise kann ein Transportdatensatz T Protokolldaten in Form einer eindeutigen Versionsnummer umfassen.

Fig. 4 zeigt ein Ablaufdiagramm des Verfahrens zum Optimieren und Durchführen eines Großraum- und/oder Schwertransports gemäß einem Beispiel.

Zunächst wird ein Schritt des Erzeugens 110 eines insbesondere initialen Transportdatensatzes T durchgeführt. Vorzugsweise wird der initiale Transportdatensatz durch den ersten Benutzer A erzeugt.

Das Erzeugen 110 kann das Durchführen einer Vorprüfung umfassen (nicht im Detail dargestellt). Beispielsweise kann der erste Benutzer A mithilfe eines Algorithmus unter Berücksichtigung der Schwertransportdaten GST einen Routenvorschlag generieren. Beispielsweise kann der Routenvorschlag nur entlang einer Strecke verläuft, deren Verkehrsbauwerke gemäß einer vorläufigen Kollisionsprüfung mit den Schwertransportdaten GST in Einklang zu bringen sind.

Nach dem Erzeugen 110 des Transportdatensatzes erfolgt ein Schritt des Bereitstellens 120 des initialen oder gegebenenfalls modifizierten Transportdatensatzes T durch den ersten Benutzer A an den virtuellen Datenraum D. Der vom ersten Benutzer A bereitgestellte Transportdatensatzes T kann mit einem Identifikator verknüpft werden, der eindeutig dem ersten Benutzer A zugeordnet ist.

Nachdem der Transportdatensatz an den virtuellen Datenraum D bereitgestellt wurde, kann ein Schritt des Betrachtens 230 des Transportdatensatzes T durch den zweiten Benutzer B beziehungsweise einen der zweiten Benutzer durchgeführt werden.

Alternativ oder zusätzlich kann das Verfahren das Prüfen P_{B} eines Transportdatensatzes T durch den zweiten Benutzer B umfassen.

Auf das Prüfen P_{B} kann ein Modifizieren 240 des Transportdatensatzes T durch den zweiten Benutzer B folgen. Das Modifizieren 240 kann insbesondere als Ergebnis des Prüfens P_{B} durchgeführt werden.

Insbesondere wenn das Prüfen P_{B} ein positives Ergebnis zur Folge hat, kann der zweite Benutzer den Transportdatensatz T hinsichtlich seiner Statusinformationen modifizieren. Insbesondere kann der zweite Benutzer B, vorzugsweise ein übergeordneter zweiter Benutzer B1, den Transportdatensatz T dahingehend modifizieren, dass dem modifizierten Transportdatensatz T ein Bewilligungsstatus als Statusinformation zugeordnet wird.

Der zweite Benutzer B kann beim Modifizieren 240 den Transportdatensatz T in Abhängigkeit vom Ergebnis des Prüfens P_{B} den Transportdatensatz T zumindest streckenabschnittsweise hinsichtlich der Streckeninformationen S, insbesondere in Bezug auf Handlungsvorgaben Z, modifizieren.

Beim Modifizieren 240 des Transportdatensatzes T durch den zweiten Benutzer B beziehungsweise einen der zweiten Benutzer B, B1, B2, B3 kann diesem modifizierten Transportdatensatz T ein eindeutig dem modifizierenden zweiten Benutzer B, B1, B2, B3 assoziierten Identifikator zugeordnet werden.

Nach dem Modifizieren 240 des Transportdatensatzes T erfolgt ein Schritt des Bereitstellens 220 des modifizierten Transportdatensatzes T durch den zweiten Benutzer B, B1, B2, B3 an den virtuellen Datenraum D. Der vom zweiten Benutzer B, B1, B2, B3 bereitgestellte modifizierte Transportdatensatzes T kann beim Bereitstellen 220 mit einem Identifikator verknüpft werden, der eindeutig dem bereitstellenden zweiten Benutzer B, B1, B2, B3 assoziierten Identifikator zugeordnet werden.

Wenn mehrere zweite Benutzer B1, B2, B3 an dem Verfahren beteiligt sind, können die Schritte 230, P_{B}, 240 und 220 einzeln oder in ihrer Gesamtabfolge (durch den gestrichelten Pfeil angedeutet) durch die mehreren Benutzer B1, B2, B3, insbesondere sukzessive nacheinander, durchgeführt werden.

Der vom zweiten Benutzer B bereitgestellte modifizierte Transportdatensatzes T kann mit einem Identifikator verknüpft werden, der eindeutig demjenigen zweiten Benutzer B zugeordnet ist, durch den das Bereitstellen 220 erfolgt.

Nachdem der von einem zweiten Benutzer B modifizierte Transportdatensatz T an den virtuellen Datenraum D bereitgestellt wurde, kann neuerlich ein Schritt des Betrachtens 230 des Transportdatensatzes T durch einen anderen zweiten Benutzer B beziehungsweise durchgeführt werden (gestrichelter Pfeil).

Nachdem der von wenigstens einem zweiten Benutzer B, B1, B2, B3 modifizierte Transportdatensatz T an den virtuellen Datenraum D bereitgestellt wurde, kann ein Schritt des Betrachtens 130 des Transportdatensatzes T durch einen ersten Benutzer A durchgeführt werden.

Alternativ oder zusätzlich kann das Verfahren das Prüfen P_{A} des modifizierten Transportdatensatzes T durch den ersten Benutzer A umfassen.

Auf das Prüfen P_{A} kann ein Modifizieren 140 des Transportdatensatzes T durch den ersten Benutzer A folgen. Das Modifizieren 140 durch den ersten Benutzer kann insbesondere als Ergebnis des Prüfens P_{A} durchgeführt werden.

Insbesondere wenn das Prüfen P_{A} ein positives Ergebnis zur Folge hat, kann der erste Benutzer A das Durchführen 300 eines Transports entsprechend diesem geprüften Transportdatensatz T veranlassen.

Der erste Benutzer A kann beim Modifizieren 140 den Transportdatensatz T in Abhängigkeit vom Ergebnis des Prüfens P_{A} den Transportdatensatz T in Bezug auf die Schwertransportdaten GST und/oder, zumindest streckenabschnittsweise, hinsichtlich der Streckeninformationen S modifizieren.

Beim Modifizieren 140 des Transportdatensatzes T durch den ersten Benutzer A kann diesem modifizierten Transportdatensatz T ein eindeutig dem modifizierenden ersten Benutzer A assoziierten Identifikator zugeordnet werden.

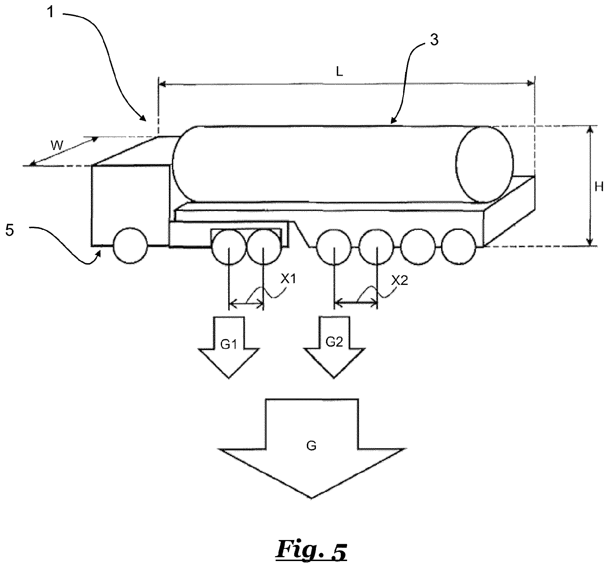

Fig. 5 zeigt eine schematische Darstellung eines Schwertransports 1 gemäß einem Beispiel. In Fig. 5 werden insbesondere die Transportdaten GST des Schwertransports 1 anschaulich dargestellt.

Der Schwertransport 1 umfasst ein Transportgut 3 und ein Transportfahrzeug 5. Das Transportfahrzeug 5 umfasst eine Zugmaschine und einen Auflieger, der eine Ladefläche zum Tragen des Transportguts 3 aufweist. In diesem Beispiel wird die Gesamtheit des Transportguts 3 und des Transportfahrzeugs 5 als den Schwertransport 1 bezeichnet. Der Schwertransport 1 weist eine Länge L, eine Höhe H, eine Breite W und eine Gesamtmasse G auf. Ferner weist der Schwertransport 1 mehrere Achsen mit einer jeweiligen Achslast G1, G2 auf, wobei in Fig. 5 nur zwei von insgesamt sieben Achslasten dargestellt sind. Die Länge L, Höhe H, Breite Bund Gesamtmasse G sowie die Achslasten G1, G2 zählen zu den Transportdaten des Schwertransports 1. Ferner können Achsabstände X1, X2 (wobei in Fig. 5 nur zwei von insgesamt sechs Achsabständen dargestellt sind) und das Kurvenverhalten des Schwertransports 1 zu den Transportdaten des Schwertransports 1 zählen.

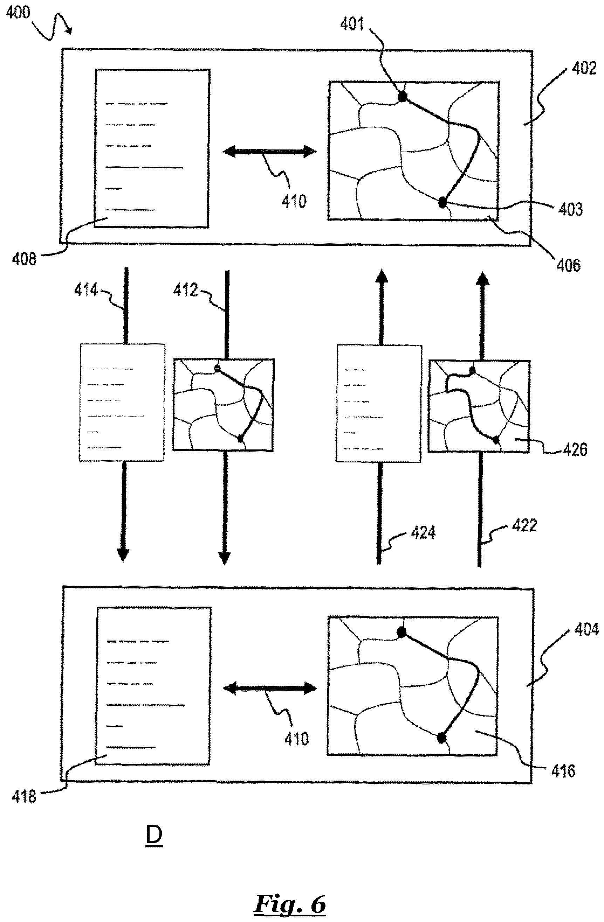

Fig. 6 zeigt eine schematische Darstellung eines verteilten Systems 400 zur Ausführung eines computerimplementierten Verfahrens gemäß einem Beispiel. Insbesondere ist das verteilte System geeignet, das computerimplementierte Verfahren und dessen Ausführungsformen wie hierin offenbart auszuführen, einschließlich des computerimplementierten Verfahrens 100 wie oben beschrieben. Ferner ist das verteilte System 400 strukturell und funktionell wie vorstehend erläutert definiert und die Beschreibung wird an dieser Stelle nicht wiederholt.

Das verteilte System 400 umfasst als ersten Teil den virtuellen Datenraum D, sowie einen zweiten Teil 402 und einen dritten Teil 404, die jeweils durch eine Computereinrichtung wie vorstehend erläutert realisiert werden können. Der zweite Teil 402 und der dritte Teil 404 können über den virtuellen Datenraum D miteinander kommunizieren, d.h. Daten austauschen. Die Kommunikation kann über ein privates Netzwerk und/oder über ein öffentliches Netzwerk erfolgen. Insbesondere kann die Kommunikation über einen oder mehrere speziell als virtuellen Datenraum D eingerichteten (Cloud-) Server (nicht dargestellt) erfolgen, auf den Zugriffe sowohl durch den zweite Teil 402 als auch den dritten Teil 404 erfolgen können. Beispielsweise kann jeder des zweiten Teils 402 und des dritten Teils 404 Transportdatensätze T sowie gegebenenfalls damit assoziierte Informationen M in dem virtuellen Datenraum D speichern und dem jeweils anderen Teil zur Verfügung stellen.

Das verteilte System 400 kann einen Teil oder beliebig viele Teile zusätzlich zu dem zweiten Teil 402 und dem dritten Teil 404 umfassen, die jeweils eine Computereinrichtung wie hierin definiert sein können und in vorstehend erläuterten Weise miteinander kommunizieren können.

Der zweite Teil 402 ist eingerichtet, den Routenvorschlag unter Berücksichtigung des Startpunkts 401, des Zielpunkts 403 und der Transportdaten des Schwertransports und unter Berücksichtigung von Verkehrsbauwerken und zugehörigen Einschränkungsdaten wie vorstehend erläutert zu erstellen. Insbesondere entspricht der zweite Teil 402 einer Computereinrichtung eines ersten Benutzers A, der einen Routenvorschlag erstellt und für den zweiten Benutzer wie eine Prüfeinrichtung, verkörpert durch den dritten Teil 404, im ersten Teil bereitstellt.

Der erste Teil, das heißt, der virtuelle Datenraum D, ist mit einer digitalen Karte ausgestattet. Die digitale Karte ist wie vorstehend erläutert ausgestaltet und die Beschreibung wird an dieser Stelle nicht wiederholt. Der Routenvorschlag wird zunächst als eine kartographische Darstellung 406 in der digitalen Karte erzeugt. Für die kartographische Darstellung 406 des Routenvorschlags in der digitalen Karte in dem zweiten Teil 402 wird der Routenvorschlag als ein erster Transportdatensatz T erstellt, wie vorstehend ausführlich erläutert. Die kartographische Darstellung 406 des Routenvorschlags zeigt insbesondere eine Route (dicke Linie) von dem Startpunkt 401 bis zu dem Zielpunkt 403. Die dünnen Linien in der kartographischen Darstellung 406 veranschaulichen sonstige Verkehrsbauwerke einschließlich Stra-ßen, die nicht zu der Route des Routenvorschlags gehören, wobei die dargestellten dünnen Linien insbesondere nur solche Verkehrsbauwerke einschließlich Straßen veranschaulichen, die mit den Schwertransportdaten GST des Transportdatensatzes T kompatibel sind.

Zusätzlich oder alternativ kann der Transportdatensatz in eine vorbestimmte zweite Datenstruktur STR umgewandelt werden, die beispielsweise für eine Textdarstellung des Routenvorschlags geeignet sein kann. Insbesondere ist die zweite Datenstruktur STR eingerichtet, ein elektronisches Dokument 408 zu erstellen. Die Computereinrichtung des zweiten Teils 402 ist insbesondere eingerichtet, Routenvorschlag nach Bedarf in die zweite Datenstruktur STR oder aus der zweiten Datenstruktur STR umzuwandeln. Dieser Vorgang ist durch einen doppelseitigen Pfeil 410 angedeutet.

Der virtuelle Datenraum D ist für Zugriffe durch die Prüfeinrichtung bzw. den dritten Teil 404 auf den Transportdatensatz eingerichtet. Diese Vorgänge sind durch Pfeile 412, 414 angedeutet. Dabei kann der erste Transportdatensatz in dem virtuellen Datenraum D von dem zweiten Teil 402 für den dritten Teil 404 bereitgestellt werden, wie durch den Pfeil 412 angedeutet. Zusätzlich oder alternativ kann der Transportdatensatz entsprechend der vorbestimmten zweiten Datenstruktur STR von dem zweiten Teil 402 für den dritten Teil 404 bereitgestellt werden, wie durch den Pfeil 414 angedeutet.

Der dritte Teil 404 bzw. die Computereinrichtung des dritten Teils 404 greift im virtuellen Datenraum D auf den Transportdatensatz T, gegebenenfalls in der vorbestimmten Datenstruktur STR, zu. Der virtuelle Datenraum D ist dazu eingerichtet, den Routenvorschlag anhand des Transportdatensatzes in der digitalen Karte für den dritten Teil 404 kartographisch darzustellen, wie durch eine kartografische Darstellung 416 veranschaulicht.

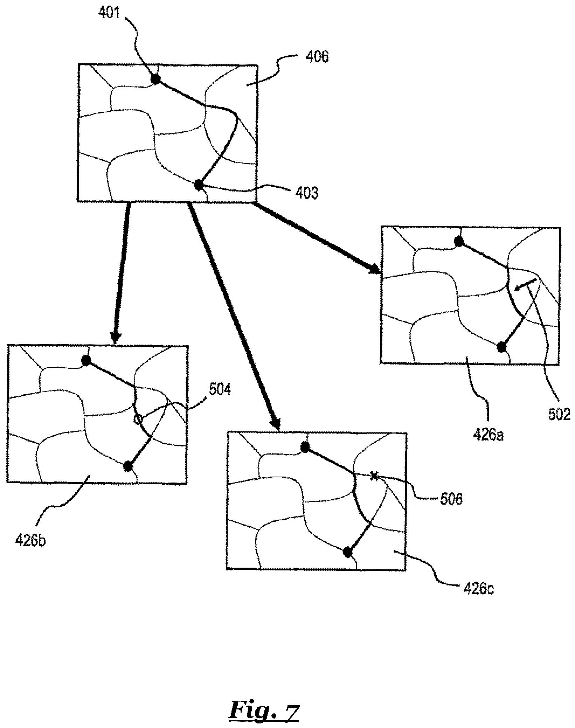

Optional können durch den dritten Teil 404 Änderungen an dem Transportdatensatz vorgenommen werden. Einige Beispiele für den Veränderungsvorgang sind nachstehend mit Bezug auf Fig. 7 beschrieben. Der aus diesen Veränderungen resultierende modifizierte Transportdatensatz wird von dem dritten Teil 404 in dem virtuellen Datenraum D für den zweiten Teil 402 bereitgestellt, wie durch Pfeile 422, 424 angedeutet. Dabei kann der modifizierte Transportdatensatz gemäß der vorbestimmten Datenstruktur STR bereitgestellt werden, wie durch den Pfeil 424 angedeutet.

Fig. 7 zeigt eine schematische Darstellung von Veränderungsvorgängen eines Transportdatensatz gemäß einigen Beispielen. In Fig. 7 wird von der kartographischen Darstellung 406 dem Transportdatensatzes in der digitalen Karte ausgegangen. Eine Änderung an dem Transportdatensatz kann vorgenommen werden, indem ein Punkt in der kartographischen Darstellung des Transportdatensatzes in der digitalen Karte gemäß einer Gummibandfunktion bewegt wird, wie durch einen Pfeil 502 in der kartographischen Darstellung 416a angedeutet. Der besagte Punkt wird ausgewählt und auf ein anderes Verkehrsbauwerk (z.B. Straßenabschnitt oder Autobahnabschnitt) bewegt, um einen entsprechenden Abschnitt des Routenvorschlags zu verändern. Dieser Änderungsvorgang ergibt den hinsichtlich der Streckeninformationen S modifizierten Transportdatensatzes 426 wie in Fig. 6 dargestellt.

Alternativ oder zusätzlich kann ein Wegpunkt oder mehrere Wegpunkte in der digitalen Karte definiert werden, die mit dem Schwertransport zu passieren gilt/gelten. Dieser Vorgang ist durch die kartographische Darstellung 416b in Fig. 7 angedeutet. Dort wird eine Stelle auf einem Verkehrsbauwerk außerhalb der (ursprünglichen, bisherigen) Route gemäß der Streckeninformationen S des (bisherigen, insbesondere initialen oder modifizierten) Transportdatensatzes als ein Wegpunkt 504 markiert und erzwingt dadurch, dass die Route des (neuen) modifizierten Transportdatensatzes durch diesen Wegpunkt verläuft. Auch dieser Änderungsvorgang ergibt den modifizierten Transportdatensatz 426 wie in FIG. 6 dargestellt.

Alternativ oder zusätzlich kann mindestens ein Verkehrsbauwerk für den Schwertransport in der digitalen Karte gesperrt werden. In der kartographischen Darstellung 426c in Fig. 7 wird ein Streckenabschnitt des (ursprünglichen, bisherigen) Routenvorschlags mit einer Sperrung 506 versehen. Ein Algorithmus kann dafür sorgen, dass die Verbindung von dem Startpunkt 401 zu dem Zielpunkt 403 zu jeder Zeit stetig sein muss. Dies kann ergeben, dass eine alternative Route wie in der kartographischen Darstellung 426c gezeigt vorgeschlagen wird. Auch dieser Änderungsvorgang ergibt den modifizierten Transportdatensatz 426 wie in Fig. 6 dargestellt.

Insgesamt ermöglichen es der hierin beanspruchte Gegenstand und seine Ausführungsformen, die Prozesse zur Einrichtung, Steuerung, Prüfung und Durchführung eines Schwertransports hinsichtlich der Effizienz, Genauigkeit und Sicherheit zu verbessern. Insbesondere werden durch den durch den hierin beanspruchten Gegenstand und seine Ausführungsformen der Arbeits-, Zeit- und Kostenaufwand für den Schwertransport gesenkt.

## Patentansprüche

1. Verfahren zum Optimieren eines Großraum- und/oder Schwertransports, umfassend
- Bereitstellen eines virtuellen Datenraums (D) zur Kommunikation zwischen einem ersten Benutzer (A) und wenigstens einem zweiten Benutzer (B, B1, B2, B3),
- Bereitstellen eines initialen Transportdatensatzes (T), der Schwertransportdaten (GST), Streckeninformationen (S), Statusinformationen und gegebenenfalls wenigstens einen Identifikator umfasst, von dem ersten Benutzer (A) an den virtuellen Datenraum (D),
- Bereitstellen eines modifizierten Transportdatensatzes (T) durch den zweiten Benutzer (B, B1, B2, B3) an den virtuellen Datenraum (D),
wobei der modifizierten Transportdatensatz (T) hinsichtlich der Streckeninformationen (S) und/oder der Statusinformationen sowie gegebenenfalls des wenigstens einen Identifikators sowie von dem initialen Transportdatensatz (T) abweicht.

2. Verfahren nach Anspruch 1, ferner umfassend
Bereitstellen einer digitalen Karte (K) in dem virtuellen Datenraum (T), wobei die digitale Karte (K) die Streckeninformationen (S) abbildet.

3. Verfahren nach Anspruch 2, wobei
die in dem virtuellen Datenraum (D) bereitgestellte digitale Karte (K) unter Berücksichtigung der Schwertransportdaten (GST) dargestellt wird.

4. Verfahren nach Anspruch 2 oder 3, wobei
die Streckeninformationen durch den ersten Benutzer (A) und/oder durch den wenigstens einen zweiten Benutzer (B, B1, B2, B3) mittels der digitalen Karte (K) modifiziert werden.

5. Verfahren nach einem der vorstehenden Ansprüche, wobei
eine URI-Adresse, beispielsweise ein Hyperlink, an den wenigstens einen zweiten Benutzer (B, B1, B2, B3) übermittelt wird, und wobei der wenigstens einen zweite Benutzer (B, B1, B2, B3) vermittels der URI-Adresse auf den virtuellen Datenraum zugreift.

6. Verfahren nach einem der vorstehenden Ansprüche, wobei
mehrere zweite Benutzer (B, B1, B2, B3) zum Bereitstellen eines jeweiligen modifizierten Transportdatensatzes (T) auf den virtuellen Datenraum (D) zugreifen.

7. Verfahren nach Anspruch 6, wobei
nur ein einziger bestimmter zweiter Benutzer (B, B1, B2, B3) dazu befähigt ist, einen hinsichtlich des wenigstens der Statusinformationen modifizierten Transportdatensatz (T) bereitzustellen.

8. Verfahren nach Anspruch 6 oder 7, wobei
die Streckeninformationen (S) in mehrere Streckenabschnittsinformationen unterteilt werden, wobei die mehreren Streckenabschnittsinformationen verschiedenen zweiten Benutzer (B1, B2) zugeordnet werden, wobei die zweiten Benutzer (B, B1, B2, B3) nur in Bezug auf die ihnen zugeordneten Streckenabschnittsinformationen befähigt sind, einen hinsichtlich dieser Streckenabschnittsinformationen modifizierten Transportdatensatz (T) bereitzustellen.

9. Verfahren nach einem der vorstehenden Ansprüche, wobei
aus dem virtuellen Datenraum (D) ein Transportdatensatz (T) gemäß einer vorbestimmten maschinenlesbaren Datenstruktur (STR) exportiert wird, und/oder wobei das Bereitstellen eines Transportdatensatz (T) an den virtuellen Datenraum (D) durch importieren dieses Transportdatensatzes (T) in dem vorbestimmten maschinenlesbaren Datenstruktur (STR) durchgeführt wird.

10. Verfahren nach einem der vorstehenden Ansprüche, ferner umfassend
Bereitstellen einer mit dem Transportdatensatz (T) assoziierten Information (M) an den virtuellen Datenraum (D) durch den wenigstens einen zweiten Benutzer (B, B1, B2, B3) und/oder den ersten Benutzer (A).

11. Verfahren zum Durchführen eines Großraum- und/oder Schwertransports, umfassend das Verfahren gemäß einem der vorstehenden Ansprüche, wobei ein Schwertransportfahrzeug (5) auf Strecke verkehrt, die zu einem mit dem Verfahren erzeugten modifizierten Transportdatensatz (T) korrespondiert.

## Geänderte Patentansprüche

### Geänderte Patentansprüche gemäss Regel 137(2) EPÜ.

1. Verfahren zum Optimieren eines Großraum- und/oder Schwertransports, umfassend
- Bereitstellen eines virtuellen Datenraums (D) zur Kommunikation zwischen einem ersten Benutzer (A) und wenigstens einem zweiten Benutzer (B, B1, B2, B3),
- Bereitstellen eines initialen Transportdatensatzes (T), der Schwertransportdaten (GST), Streckeninformationen (S), Statusinformationen und gegebenenfalls wenigstens einen Identifikator umfasst, von dem ersten Benutzer (A) an den virtuellen Datenraum (D),
- Bereitstellen einer digitalen Karte (K) in dem virtuellen Datenraum (T), wobei die digitale Karte (K) die Streckeninformationen (S) abbildet, und wobei die in dem virtuellen Datenraum (D) bereitgestellte digitale Karte (K) unter Berücksichtigung der Schwertransportdaten (GST) dargestellt wird, und
- Bereitstellen eines modifizierten Transportdatensatzes (T) durch den zweiten Benutzer (B, B1, B2, B3) an den virtuellen Datenraum (D),
wobei der modifizierten Transportdatensatz (T) hinsichtlich der Streckeninformationen (S) und/oder der Statusinformationen sowie gegebenenfalls des wenigstens einen Identifikators von dem initialen Transportdatensatz (T) abweicht.

2. Verfahren nach Anspruch 1, ferner umfassend
eine Änderung eines Teils der Schwertransportdaten (GST) oder der Gesamtheit der Schwertransportdaten (GST),
wobei die Veränderung der Schwertransportdaten (GST) eine Änderung der Kompatibilität der Schwertransportdaten (GST) mit Stellen entlang der Transportstrecke entsprechend der Streckeninformationen (S) und/oder außerhalb der Streckeninformationen (S) zur Folge hat,
wobei die Änderung der Kompatibilität in dem virtuellen Datenraum (D) in der digitalen Karte (K) kartographisch dargestellt wird.

3. Verfahren nach Anspruch 1, ferner umfassend, dass durch den ersten Benutzer (A) und/oder den wenigstens einen zweiten Benutzer (B, B1, B2, B3, B4) eine Prüfung veranlasst wird, ob Einschränkungsdaten zu Verkehrsbauwerken mit den Schwertransportdaten (GST) kompatibel sind,
wobei der erste Benutzer (A) und/oder der wenigstens zweite Benutzer (B, B1, B2, B3, B4) die Kompatibilitätsprüfung in dem virtuellen Datenraum (D) durchführt und basierend auf deren Ergebnis einen weiteren oder mehrere weitere modifizierten Transportdatensatz erzeugt und im virtuellen Datenraum (D) bereitgestellt wird.

4. Verfahren nach einem der vorstehenden Ansprüche , wobei die Streckeninformationen durch den ersten Benutzer (A) und/oder durch den wenigstens einen zweiten Benutzer (B, B1, B2, B3) mittels der digitalen Karte (K) modifiziert werden.

5. Verfahren nach einem der vorstehenden Ansprüche, wobei eine URI-Adresse, beispielsweise ein Hyperlink, an den wenigstens einen zweiten Benutzer (B, B1, B2, B3) übermittelt wird, und wobei der wenigstens einen zweite Benutzer (B, B1, B2, B3) vermittels der URI-Adresse auf den virtuellen Datenraum zugreift.

6. Verfahren nach einem der vorstehenden Ansprüche, wobei mehrere zweite Benutzer (B, B1, B2, B3) zum Bereitstellen eines jeweiligen modifizierten Transportdatensatzes (T) auf den virtuellen Datenraum (D) zugreifen.

7. Verfahren nach Anspruch 6, wobei
nur ein einziger bestimmter zweiter Benutzer (B, B1, B2, B3) dazu befähigt ist, einen hinsichtlich des wenigstens der Statusinformationen modifizierten Transportdatensatz (T) bereitzustellen.

8. Verfahren nach Anspruch 6 oder 7, wobei
die Streckeninformationen (S) in mehrere Streckenabschnittsinformationen unterteilt werden, wobei die mehreren Streckenabschnittsinformationen verschiedenen zweiten Benutzer (B1, B2) zugeordnet werden, wobei die zweiten Benutzer (B, B1, B2, B3) nur in Bezug auf die ihnen zugeordneten Streckenabschnittsinformationen befähigt sind, einen hinsichtlich dieser Streckenabschnittsinformationen modifizierten Transportdatensatz (T) bereitzustellen.

9. Verfahren nach einem der Ansprüche 6 bis 8, wobei
die mehreren zweiten Benutzer (B, B1, B2, B3, B4) Benutzereingaben über die interaktive digitale Karte (K) in dem virtuellen Datenraum (D) tätigen, um modifizierte Transportdatensätze bereitzustellen.

10. Verfahren nach einem der vorstehenden Ansprüche, wobei aus dem virtuellen Datenraum (D) ein Transportdatensatz (T) gemäß einer vorbestimmten maschinenlesbaren Datenstruktur (STR) exportiert wird, und/oder wobei das Bereitstellen eines Transportdatensatz (T) an den virtuellen Datenraum (D) durch importieren dieses Transportdatensatzes (T) in dem vorbestimmten maschinenlesbaren Datenstruktur (STR) durchgeführt wird.

11. Verfahren nach einem der vorstehenden Ansprüche, ferner umfassend Bereitstellen einer mit dem Transportdatensatz (T) assoziierten Information (M) an den virtuellen Datenraum (D) durch den wenigstens einen zweiten Benutzer (B, B1, B2, B3) und/oder den ersten Benutzer (A).

12. Verfahren nach einem der vorstehenden Ansprüche, wobei ausschließlich vorbestimmte Benutzer (A, B, B1, B2, B3) dazu befähigt werden, auf den virtuellen Datenraum (D) zuzugreifen, wobei vorzugsweise nur die vorbestimmten Benutzer (A, B, B1, B2, B3), insbesondere der erste Benutzer (A) und der wenigstens eine zweite Benutzer (B, B1, B2, B3), autorisiert werden, auf den virtuellen Datenraum (D) zuzugreifen.

13. Verfahren nach Anspruch 12, wobei stets nur ein einziger Benutzer (A, B, B1, B2, B3) zu einem gegebenen Zeitpunkt auf den virtuellen Datenraum zuzugreifen autorisiert ist.

14. Verfahren nach einem der vorstehenden Ansprüche, wobei die Transportdatensätze (T) in dem virtuellen Datenraum (D) modifiziert werden, wobei der erste Benutzer (A) und/oder wenigstens eine zweite Benutzer (B, B1, B2, B3, B4) zum Modifizieren von Transportdatensätzen auf den virtuellen Datenraum (D) zugreifen.

15. Verfahren zum Durchführen eines Großraum- und/oder Schwertransports, umfassend das Verfahren gemäß einem der vorstehenden Ansprüche, wobei ein Schwertransportfahrzeug (5) auf Strecke verkehrt, die zu einem mit dem Verfahren erzeugten modifizierten Transportdatensatz (T) korrespondiert.
